# EUROPEAN PATENT SPECIFICATION

(11) **EP 2 099 112 B1**
(45) Date of publication and mention of the grant of the patent: **07.09.2016**
(21) Application number: 09154216.7
(22) Date of filing: 03.03.2009
(51) Int. Cl.: H02J 7/00, G06F 1/16, G06F 1/26, H01M 10/44, H01M 2/10, H01M 10/48, H01M 10/42

(54) **Information processing equipment and the integrated circuit**
Informationsverarbeitungsvorrichtung und integrierte Schaltung
Équipement de traitement d'informations et circuit intégré

(30) Priority: 03.03.2008 JP 2008051783; 13.03.2008 JP 2008063662; 01.04.2008 JP 2008095470
(43) Date of publication of application: 09.09.2009
(73) Proprietor: Panasonic Corporation, Kadoma-shi Osaka 571-8501 (JP)
(72) Inventor: Nakanuma, Hiroyuki, Osaka 540-6207 (JP); Yuki, Toshiaki, Osaka 540-6207 (JP); Omyou, Keiichi, Osaka 540-6207 (JP); Morita, Shigehito, Osaka 540-6207 (JP); Harada, Atsushi, Osaka 540-6207 (JP)
(74) Representative: Eisenführ Speiser

(56) References cited:
- US-A- 5 553 294
- US-A- 5 739 596
- US-A- 5 955 867
- US-A- 5 998 887
- US-A1- 2005 168 194
- US-A1- 2007 285 056
- US-B1- 6 438 392
- US-B1- 6 452 362
- US-B1- 6 650 089
- US-B2- 7 166 989

## Description

The present invention relates to information processing equipment including battery housing portions that house batteries, and an integrated circuit that switches between a plurality of power supply paths. The invention particularly relates to information processing equipment that automatically changes the battery being used so that there will be no interruption in power supply during battery replacement, and an integrated circuit of the information processing equipment.

US 5,739,596 describes an electronic apparatus comprising a main circuit having a main CPU and a power supply system which includes plural main batteries for supplying operating power to said main circuit, a back-up battery, a switching circuit connected between each main battery and the main circuit, power means for enabling the operation of the main circuit, a charge detector for detecting the charging level of each main battery, and power controller responsive to the power means and the charge detector and having a sub-CPU for individually controlling the switching circuit according to either a single connection mode or a multiple connection mode. In the single connection mode only one of the main batteries is connected to said main circuit. In the multiple connection mode, at least two main batteries, each in series with a respective diode means, are connected in parallel to the main circuit. The back-up battery is connected to supply power to the power controller only when either no main battery is installed or the charging level of each of the installed main batteries is below a predetermined value required for back-up operation.

US 6,438,392 B1 describes an absence reception information device for informing the user of a folding portable cellular phone about occurrence of a call during the user's absence is proposed. A folding portable cellular phone generally has a body, a cover section which is rotatably attached to the body, and an LCD (Liquid Crystal Display) for displaying necessary information. The LCD is usually provided on the inner side of the body or the cover section and can not be seen by the user when the cover section is closed. The absence reception information device comprises an LED (Light-Emitting Diode) which is placed on the folding portable cellular phone so as to be seen by the user when the cover section is closed, and an open/close detection circuit. The open/close detection circuit detects whether the cover section is opened or closed. The LED executes absence reception information display for informing the user about occurrence of a call during the user's absence, when the open/close detection circuit is detecting that the cover section is closed. The user can easily see the LED and check whether or not a call from a calling party occurred during the user's absence even if the cover section is closed, that is, even if the folding portable cellular phone is folded up.

US 5,955,867 describes a system for charging dual battery packs. The system includes a charger for supplying current to charge a first battery pack when the first battery pack is electrically coupled to the computer system. The charger supplies current to charge a second battery pack when the second battery pack is electrically coupled to the computer system. The system also includes a charge controller, such as a keyboard controller executing a program stored in a memory, for controlling the charging of the first battery pack and the second battery pack such that the charger charges the first battery pack to a first level, the charger charges the second battery pack to a second level, and the charger simultaneously charges the first battery pack and the second battery pack when the first battery pack is charged above the first level and below a third level and the second battery pack is charged above the second level and below a fourth level. Each battery pack includes a processor, an associated memory, back to back FETs, and lithium ion cells.

US 2007/0285056 A1 describes a portable terminal and power supply control method. The portable terminal having a power supply control feature includes a main battery for supplying power to the portable terminal, an auxiliary battery for supplying power to the portable terminal independently of the main battery, a switch module for controlling the power supply of the main battery and auxiliary battery, and a power unit controller for controlling on-off settings of the switch module and for-disconnecting, when a battery level of the main battery is higher than that of the auxiliary battery, the auxiliary battery from the main battery. The battery levels of the main battery and auxiliary battery are measured and are controlled to prevent charging of the auxiliary battery with a charge current from the main battery through switch settings.

US 5,553,294 describes a computer which is not externally powered, it operates from installed first and second batteries. In top surface of the computer, LEDs are provided which indicates three states of each battery; need of charging, during charging, and completion of charging.

US 7,166,989 B2 describes a power supply system for supplying power to a load of an electronic apparatus including first and second battery units, and a selector coupled to the load and the first and second battery units. The selector is operable so as to break electrical connection between the second battery unit and the load and to simultaneously make electrical connection between the first battery unit and the load when a remaining capacity of the first battery unit is higher than a predetermined reference value, and so as to break electrical connection between the first battery unit and the load and to simultaneously make electrical connection between the second battery unit and the load when the remaining capacity of the first battery unit is lower than the predetermined reference value. A controller coupled to the selector, is responsive to a first control command, which may be issued by the electronic apparatus, so that the controller overrides the detector and enables operation of the selector in the first state.

US 6,650,089 B1 describes a capacity gauge being provided that measures a selected battery capacity of a plurality of batteries in a multiple battery system. A capacity gauge and a battery current sense resistor reside on the end equipment, while the battery pack contains minimal information associated with the battery pack. Control circuits provide for proper pack selection and pack connection timing, as well as capacity gauge synchronization. Power up/down circuits provide power to control logic, the selection circuits and capacity gauge at power up, power down and battery pack removal. The system is powered by a selected battery pack after the battery pack selection is executed, and the selected battery pack monitored by the capacity gauge.

Recently, information processing equipment including a CPU (Central Processing Unit), a storage device in which various programs are stored, an input device such as a keyboard, and an image display device and so on has been in widespread use, and commonly has been used in a variety of fields. Portable information processing equipment that contains a plurality of primary batteries (dry batteries or the like) or secondary batteries (rechargeable batteries) and is configured to be carried also has been in widespread use.

For such information processing equipment, for example, volatile memory (i.e., a semiconductor memory in which memory contents are retained only for a period during which power is supplied, and the memory contents are lost when the supply of power is stopped) such as a DRAM (Dynamic Random Access Memory) commonly is used as one component. With information processing equipment that draws power from a power source to which power is constantly supplied, such as a household AC power supply, power can be supplied for use in a stable manner and, therefore, it is quite rare that a shortage of supplied power causes a loss of memory contents from a volatile memory used in the information processing equipment. However, in the case of portable information processing equipment, when the remaining battery power is reduced and the voltage or the current that can be drawn from the battery falls below the operation compensation range of the volatile memory used in the information processing equipment, for example, by using the battery for a long time, the memory contents will be lost from the volatile memory, and the information processing equipment will not operate formally.

Therefore, in order to prevent such a problem, a technique has been disclosed in which a backup battery is connected automatically when replacing a constantly connected main battery, thereby switching from the main battery to the backup battery and allowing the power supply to continue (see, for example, JP H7-29716Y).

Another technique also has been disclosed in which an equipment operating state is switched to a state in which a memory protection circuit is driven, by sliding a switching operation portion from the equipment operating side to the battery replacing side (see, for example, JP H5-225140A).

A further technique has also been disclosed in which, in an electronic device configured to contain a plurality of batteries, the remaining battery power of each of the batteries is sensed, and the sensed remaining battery power is displayed on a panel (see, for example, JP 2002-216856A).

A yet further technique has been disclosed with which in an electronic device configured to contain a plurality of batteries and to use the individual batteries alternately, the remaining battery power of each of the contained batteries is sensed, and any consumed battery is displayed, while switching to a battery that has not been consumed by means of a manual switch, thereby enabling continuous long-term operation (see, for example, JP H5-122856A).

However, electronic devices that use a mechanically configured switch to change the battery being used have a problem in that power supply may be interrupted, for example, when changing the battery being used from the main battery to a backup battery and, therefore, the stability of such an operation is not sufficient.

Electronic devices that use a mechanically configured switch to change the battery being used also have a problem in that the switch will deteriorate with continuing use, which leads to a gradual reduction in the reliability when changing the battery being used.

The present invention was made in view of the foregoing problems, and it is an object of the present invention to provide portable information processing equipment capable of continuously operating in a stable manner for a long period and maintaining the reliability of the operation of changing the battery being used, over a long period of time, by housing a plurality of batteries that can be used independently and improving the stability when the batteries being used are switched in an alternating manner, and an integrated circuit for such switching.

Information processing equipment according to the present invention is defined in claim 1 and in claim 2.

With such a configuration, an opening or closing motion of a lid portion is detected electromagnetically with the magnetic-field-detecting elements, and the battery from which power is drawn is changed in the switching portion based on the result of that detection. Accordingly, it is possible to improve the stability of the information processing equipment during the operation of switching between the plurality of housed batteries, thereby enabling stable continuous operation for a long time. Furthermore, since the battery switching operation can be performed using an electronic switch, it is possible to maintain the stability of the information processing equipment with regard to the operation of changing the battery being used for a long period.

Furthermore, it is preferable that the switching portion has a switching functionality through which power is drawn selectively from any one of the batteries housed in the plurality of battery housing portions, and, when the magnetic-field-detecting element corresponding to the lid portion of the battery from which power is being drawn detects a weak magnetic field, the control portion controls the switching portion so as to change the battery from which power is drawn to another battery. With such a configuration, the control portion detects a weak magnetic field when the lid portion of the battery from which power is drawn is changed from the closed state to the open state, and changes the battery from which power is drawn. This makes it possible freely to open and close a lid portion covering a battery from which power is not drawn, or a lid portion covering a battery housing portion in which no battery is housed, without affecting the operation of the power-drawing portion.

A magnetic field detecting functionality and a switching functionality as provided by the present invention can also be produced using integrated circuit technology, thereby realizing size and cost reductions.
FIG. 1 is a front view of information processing equipment according to an embodiment of the present invention, as viewed from the front surface thereof.
FIG. 2 is a perspective view of the aforementioned information processing equipment, as viewed from the rear surface thereof.
FIG. 3 is a block diagram showing an example of the configuration of the information processing equipment.
FIG. 4 is a state transfer diagram showing an example of the operation of the information processing equipment.
FIG. 5 is a timing chart showing an example of the operation of the information processing equipment.
FIG. 6 is a diagram showing an electrical configuration of a PDA.
FIG. 7 is a flowchart illustrating a charge/discharge control method for a plurality of batteries of the aforementioned PDA.
FIG. 8 is a diagram showing a first display example of a display of the PDA.
FIG. 9 is a diagram showing a second display example of the aforementioned display.
FIG. 10 is a diagram showing an electrical configuration of a PDA.
FIG. 11 is a flowchart illustrating a charge/discharge control method for a plurality of batteries of the aforementioned PDA.
FIGS. 12A and 12B schematically show the progress of charging, illustrating a charge control method.
FIG. 13 is a flowchart illustrating a charge control method for a plurality of batteries.
FIGS. 14A and 14B schematically show the progress of discharging, illustrating a discharge control method.
FIG. 15 is a flowchart illustrating a discharge control method for a plurality of batteries.

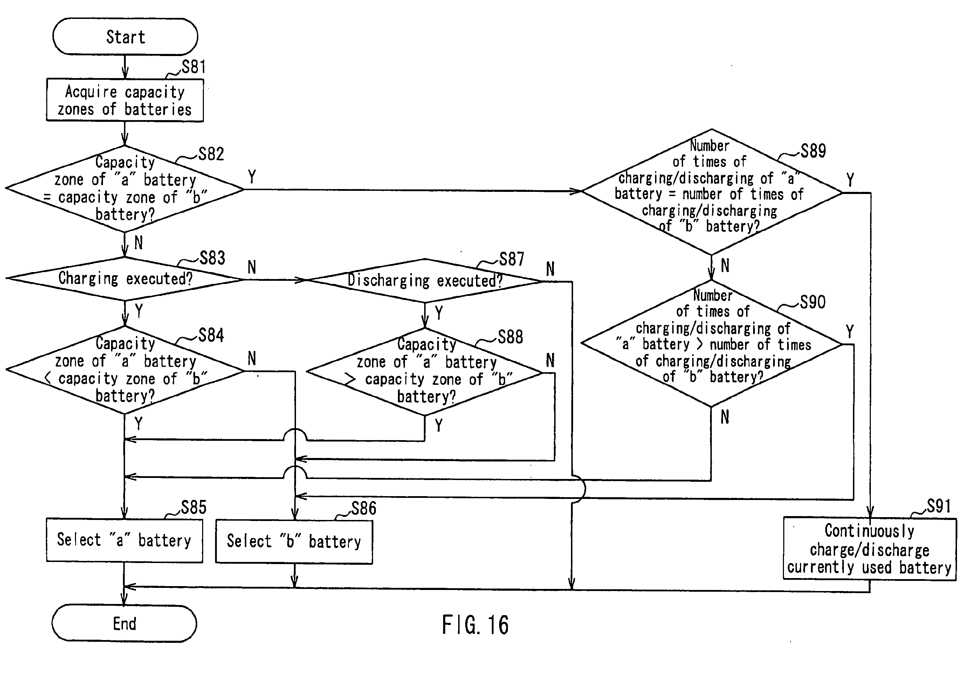

FIG. 16 is a flowchart illustrating charge/discharge control of a plurality of batteries.

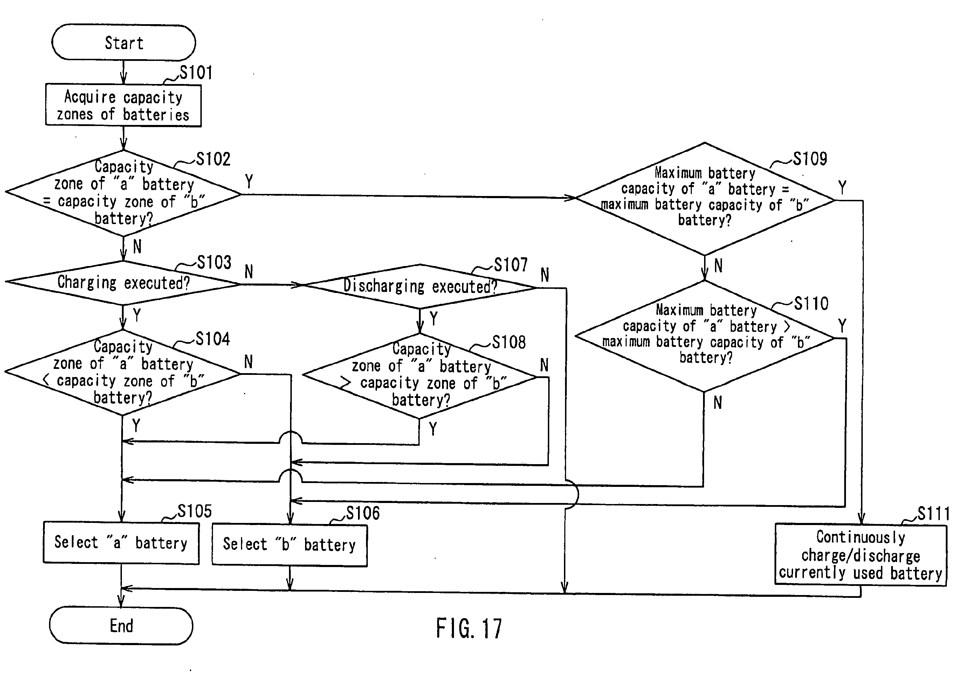

FIG. 17 is a flowchart illustrating charge/discharge control of a plurality of batteries.

Hereinafter, information processing equipment according to an embodiment of the present invention will be described with reference to the accompanying drawings.

### Embodiment

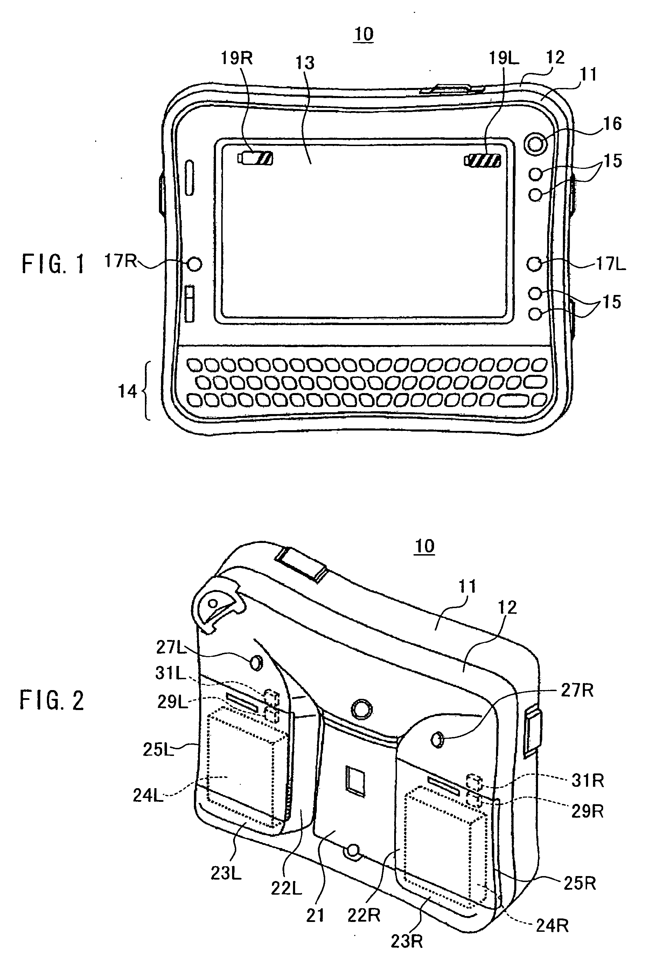

FIG. 1 is a front view of information processing equipment according to an embodiment of the present invention, as viewed from the front surface thereof, and FIG. 2 is a perspective view of the information processing equipment according to the embodiment of the invention, as viewed from the rear surface thereof. Although the configuration described in the embodiment of the present invention can be used for various types of portable information processing equipment, a personal digital assistant (hereinafter, abbreviated as "PDA") 10 having a configuration as shown in FIGS. 1 and 2 is described as an example of the information processing equipment.

As shown in FIGS. 1 and 2, the PDA 10 includes a front casing portion 11 and a rear casing portion 12, which are produced by molding resin or the like. As shown in FIG. 1, a display portion 13 that displays the results of an operation in the PDA 10 by means of images, a keyboard 14 through which input operations performed by the user are accepted, a plurality of operation buttons 15 to which various operational functionalities in the PDA 10 are assigned beforehand, a power switch 16 and so on are disposed on the front casing portion 11, so that all the manipulations of the PDA 10 can be performed on the front side. Although a thin display device such as an LCD (Liquid Crystal Display) or an EL (Electro Luminescence) display is used suitably as the display portion 13, other display devices may be used. Display devices that are integrated with a touch panel or the like and have an input functionality also may be used.

On the front casing portion 11 side, a first front remaining battery power display portion 17L and a second front remaining battery power display portion 17R are provided that respectively display the remaining power of a plurality of (in this case, two) batteries used as the power sources of the PDA 10. In this embodiment, a first remaining battery power display icon 19L and a second remaining battery power display icon 19R that indicate the remaining power of the batteries are displayed on the display portion 13, along with the first front remaining battery power display portion 17L and the second front remaining battery power display portion 17R. However, it is also possible to adopt a configuration in which only the first front remaining battery power display portion 17L and the second front remaining battery power display portion 17R are provided. Alternatively, it is also possible to adopt a configuration in which the first front remaining battery power display portion 17L and the second front remaining battery power display portion 17R are omitted, and the remaining power of the batteries is indicated using only the first remaining battery power display icon 19L and the second remaining battery power display icon 19R.

As shown in FIG. 2, the rear portion of the rear casing portion 12 is configured to include a lower surface portion 21, as well as a higher surface portion 22L and a higher surface portion 22R that are provided connected in a row with the lower surface portion 21. The higher surface portions 22L and 22R are respectively provided on both sides of the rear casing portion 12, and a first battery housing portion 23L and a second battery housing portion 23R that individually house a battery are provided in the higher surface portions 22L and 22R.

A first battery 24L is housed in the first battery housing portion 23L, and a second battery 24R is housed in the second battery housing portion 23R. In this embodiment of the invention, batteries capable of independently supplying power to the PDA 10 are used as the first battery 24L and the second battery 24R, and the PDA 10 can be operated continuously for a long time by changing the battery being used as the power source of the PDA 10 in a power-drawing portion 36 (not shown in FIGS. 1 and 2) described later. Primary batteries such as dry batteries may be used as the first battery 24L and the second battery 24R. Alternatively, rechargeable secondary batteries may be used.

The PDA 10 in this embodiment of the invention also includes the same number of lid portions that are opened and closed during attachment and removal of the batteries as the number of batteries housed in the housing portions. That is, a first battery lid 25L and a second battery lid 25R serving as lid portions provided with a hook are attached to the first battery housing portion 23L and the second battery housing portion 23R, respectively.

In the vicinity of the first battery lid 25L and the second battery lid 25R, a first rear remaining battery power display portion 27L and a second rear remaining battery power display portion 27R corresponding to the batteries housed under the respective battery lids are provided. Light emitting elements configured of an LED (Light Emitting Diode) or the like are used as the first front remaining battery power display portion 17L and the second front remaining battery power display portion 17R, as well as the first rear remaining battery power display portion 27L and the second rear remaining battery power display portion 27R, and these portions are configured to provide a binary indication, such as being unlit when there is sufficient remaining battery power and being lit when the remaining battery power has fallen below a predetermined value. For the measurement of the remaining battery power, it is possible to use, for example, a method in which the output voltage of the batteries is measured, and the measured voltages are compared with a pre-defined threshold value.

Note that the first front remaining battery power display portion 17L is configured to be lit in the same manner as the first rear remaining battery power display portion 27L, and the second front remaining battery power display portion 17R is configured to be lit in the same manner as the second rear remaining battery power display portion 27R. This makes it possible to improve usability. For example, it is possible to reduce the risk of erroneously removing a battery with little remaining power as a result of turning the PDA 10 upside down during battery replacement.

Besides light emitting elements that are lit in a single color, light emitting elements that are lit in two colors may be used, and the light emitting elements may be lit in one color (for example, green) when there is sufficient remaining battery power, and may be lit in the other color (for example, red) when the remaining battery power has fallen below a predetermined value. With this configuration, the light emitting elements can be unlit when no battery is housed, which makes it possible to improve usability.

The following describes a configuration of this embodiment of the invention in which the batteries used as the power source of the PDA 10 are switched automatically by opening or closing the battery lids.

As shown in FIG. 2, in this embodiment of the invention, a first magnet 29L and a second magnet 29R serving as magnetic-field-generating portions are fixed to the first battery lid 25L and the second battery lid 25R, respectively. In addition, a first magnetic-field-detecting element 31L and a second magnetic-field-detecting element 31R that change an output signal depending on the strength of the magnetic field are provided on the rear casing portion 12 at locations adjacent to and facing the first magnet 29L and the second magnet 29R, respectively, when the first battery lid 25L and the second battery lid 25R are closed. For example, a so-called "Hall IC", in which a Hall element serving as a magnetic sensor and a circuit that converts the output signals of the Hall element into digital signals are integrated in a single chip, can be used as the first magnetic-field-detecting element 31L and the second magnetic-field-detecting element 31R. However, other elements that change the output signal depending on the strength of the magnetic field also may be used.

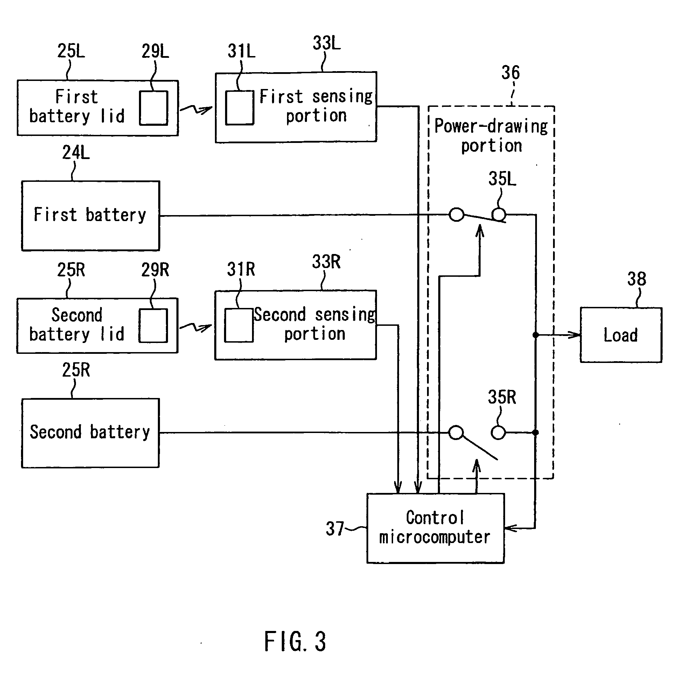

FIG. 3 is a block diagram showing an example of the configuration of the PDA 10 according to this embodiment of the invention. Note that this block diagram shows components relating to a configuration in which batteries used as the power source of the PDA 10 are switched automatically by opening or closing the battery lids; and components that perform various computations or the like in the PDA 10, the display portion 13 and so on are shown collectively as a load 38.

The power-drawing portion 36 serving as a switching portion includes a first switch 35L that is brought into a state of conduction when power is drawn from the first battery 24L, and a second switch 35R that is brought into a state of conduction when power is drawn from the second battery 24R. The power-drawing portion 36 has a switching functionality through which power is drawn selectively from any one of the plurality of batteries (in this case, the first battery 24L and the second battery 24R) housed in the battery housing portions (in this case, the first battery housing portion 23L and the second battery housing portion 23R) by switching between the switches to be brought into a state of conduction. Here, switching between the first switch 35L and the second switch 35R is performed using a control microcomputer 37 serving as a control portion. For example, electronic elements through which a large current can be passed with little loss, such as a MOSFET (Metal Oxide Semiconductor Field Effect Transistor), can be used as the first switch 35L and the second switch 35R. Thus, the battery switching operation in this embodiment of the invention is performed using electronic switches in the power-drawing portion 36. Accordingly, this configuration will experience less deterioration than a conventional configuration in which the battery switching operation is performed mechanically, and therefore can maintain the reliability of the battery switching operation over a long period.

By using integrated circuit technology to integrate the switching functionality, the magnetic-field-detecting functionality, and the control functionality, such as the power-drawing portion 36 serving as the switching portion, a first sensing portion 33L and a second sensing portion 33R respectively including the first magnetic-field-detecting element 31L and the second magnetic-field-detecting element 31R, and the control microcomputer 37 serving as the control portion, it is possible to realize a device that implements these functionalities with a small size and low costs, and to mount such a device within information processing equipment.

During a "closed state", in which the first battery lid 25L is closed, the first magnetic-field-detecting element 31L detects a strong magnetic field as the magnetic field strength, and a signal indicating "closed state" (for example, "Hi") is output from the first sensing portion 33L including the first magnetic-field-detecting element 31L to the control microcomputer 37. On the other hand, during an "open state", in which the first battery lid 25L is open, the first magnetic-field-detecting element 31L detects a weak magnetic field as the magnetic field strength, and a signal indicating "open state" (for example, "Lo") is output from the first sensing portion 33L to the control microcomputer 37.

Similarly, from the second sensing portion 33R including the second magnetic-field-detecting element 31R, "Hi" is output to the control microcomputer 37 if the second battery lid 25R is in a "closed state", and "Lo" is output to the control microcomputer 37 if the second battery lid 25R is in an "open state", through the same operation.

Thus, in each of the sensing portions, the opening or closing motion of the lid portion is sensed by electromagnetically sensing a change in distance between the magnet fixed to the lid portion and the detecting element, and a signal indicating the result of the sensing is output. Accordingly, this configuration will experience less deterioration than a configuration in which the opening or closing motion of the lid portions is sensed using a mechanical contact mechanism, and therefore can maintain reliable sensing of the opening or closing motion of the lid portions over a long period.

The control microcomputer 37 controls the power-drawing portion 36 in accordance with signals transmitted from the first sensing portion 33L and the second sensing portion 33R.

For example, if a signal indicating that the first battery lid 25L has changed from a "closed state" to an "open state" is transmitted from the first sensing portion 33L (if the signal transmitted from the first sensing portion 33L has changed from "Hi" to "Lo") when the first switch 35L is in a state of conduction (on) and the second switch 35R is interrupted (off), then it is determined that the first battery lid 25L has been opened in order to remove the first battery 24L. Accordingly, in order to switch the battery from which power is drawn from the first battery 24L to the second battery 24R, the second switch 35R is switched from off to on, and then the first switch 35L is switched from on to off

On the other hand, if a signal indicating that the second battery lid 25R has been changed from a "closed state" to an "open state" is transmitted from the second sensing portion 33R (if the signal transmitted from the second sensing portion 33R has changed from "Hi" to "Lo") when the first switch 35L is on and the second switch 35R is off, then it is determined that the state of the first battery 24L, which currently is being used, has not changed. Accordingly, both the first switch 35L and the second switch 35R are maintained as they are.

When the first switch 35L is off and the second switch 35R is on, the above-described determinations are made in the opposite way, and the first switch 35L and the second switch 35R are each controlled accordingly.

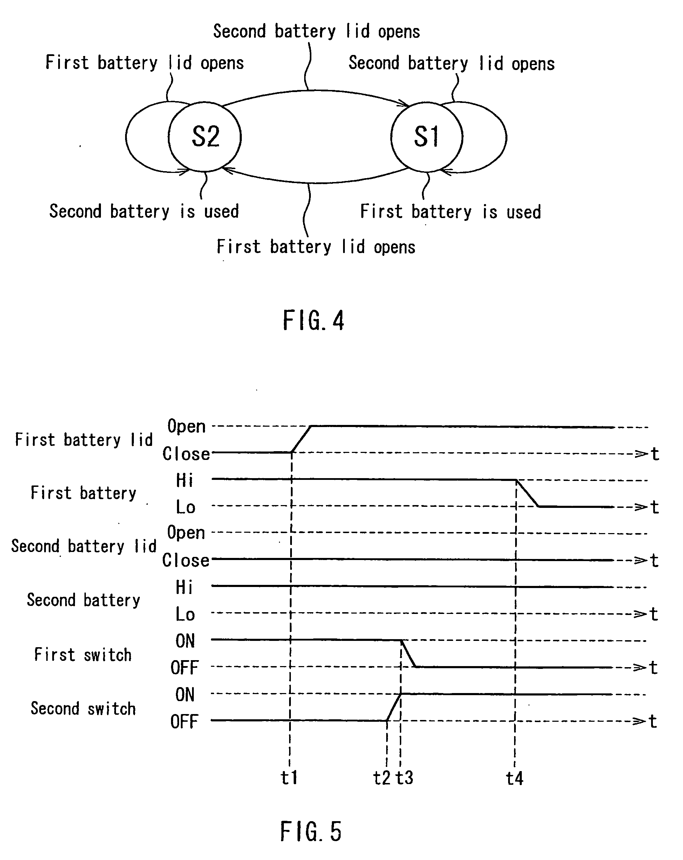

FIG. 4 is a state transfer diagram showing an example of the operation of the PDA 10 according to this embodiment of the invention. Here, the state in which power is drawn from the first battery 24L is taken as "State S1", and the state in which power is drawn from the second battery 24R is taken as "State S2".

As shown in FIG. 4, in this embodiment of the invention, when the PDA 10 is in "State S1", the operation of the PDA 10 will not be changed even if an opening or closing motion of the second battery lid 25R occurs. Similarly, when the PDA 10 is in "State S2", the operation of the PDA 10 will not be changed even if an opening or closing motion of the first battery lid 25L occurs.

Then, if an "open state" of the first battery lid 25L is sensed when the PDA 10 is in "State S1", the control microcomputer 37 changes the state of the PDA 10 from "State S1" to "State S2". Similarly, if an "open state" of the second battery lid 25R is sensed when the PDA 10 is in "State S2", the control microcomputer 37 changes the state of the PDA 10 from "State S2" to "State S1".

Thus, according to this embodiment of the invention, when the battery lid that covers the battery being used is opened, it is assumed that the battery being used subsequently is to be removed, and the battery being used is changed.

FIG. 5 is a timing chart showing an example of the operation of the PDA 10 according to this embodiment of the invention. Here, the operation performed when removing the first battery 24L being used from the PDA 10 will be described as an example.

### Time t1

The user is notified of a decrease in the remaining power of the first battery 24L, for example, through a change in the lighting state of the first front remaining battery power display portion 17L, and the first battery lid 25L is brought into an "open state" in order to remove the first battery 24L. The state change of the first battery lid 25L is sensed by the first sensing portion 33L, and the result of the sensing is transmitted to the control microcomputer 37.

### Time t2

The control microcomputer 37 changes the second switch 35R from off to on in order to switch the battery from which power is drawn to the second battery 24R.

### Time t3

After turning the second switch 35R on, the control microcomputer 37 changes the first switch 35L from on to off in order to prepare for the removal of the first battery 24L.

According to this embodiment of the invention, a period in which both the first switch 35L and the second switch 35R are on is provided in this way, thereby preventing the occurrence of any period in which power cannot be drawn from the batteries, and improving the stability of the operation in the PDA 10. Although turning both the first switch 35L and the second switch 35R on causes a phenomenon in which power passes through from a battery with a high output voltage to a battery with a low voltage, the first switch 35L and the second switch 35R in this embodiment of the invention are configured using electronic switches, so that the time interval between Time t2 and Time t3 can be a very short period of several tens of milliseconds or less, which will not cause any practical problems.

### Time t4

Subsequently, the first battery 24L is removed from the PDA 10.

Note that the opening or closing of the first battery lid 25L and the removal of the first battery 24L are carried out manually by the user, and, therefore, there are large variations in the time interval between Time t1 and Time t4. However, since these operations are performed by a human operator, it is highly unlikely that the time interval between Time t1 and Time t4 is shorter than several hundreds of seconds, no matter how fast the removal of the first battery 24L is carried out.

On the other hand, the detection of the state change of the first battery lid 25L at the first sensing portion 33L, and the control operation performed by the control microcomputer 37 based on the result of that detection take several tens of milliseconds or less, and are performed in a very short period, as compared with the above-described time interval. Accordingly, it is very unlikely that the battery is removed before the control microcomputer 37 switches between the switches and, therefore, no practical problems will occur. That is, the user can remove the battery being used from the PDA 10 at ease during operation.

With FIG. 5, the operation performed in the case of removing the first battery 24L from the PDA 10 has been described. However, it is conceivable that the user may open the second battery lid 25R erroneously, even though the user has been notified of a decrease in the remaining power of the first battery 24L. In such a case, if the second battery 24R is removed, power supply will not last long due to the reduced capacity of the first battery 24L, which may cause the operation of the PDA 10 to stop.

Therefore, in order to prevent the user from removing the second battery 24R erroneously, the PDA 10 according to this embodiment uses the front remaining battery power display portions 17L and 17R, as well as the rear remaining battery power display portions 27L and 27R as an alert output portion 41 to issue an alert to the user under the control of the control microcomputer 37 as shown in FIG. 3. All of the front remaining battery power display portions 17L and 17R, and the rear remaining battery power display portions 27L and 27R may be used to output an alert, or only some of them may be used to output an alert. For example, when the second battery lid 25R has been opened erroneously, the control microcomputer 37 causes the remaining battery power display portion 27L or 17L of the first battery 24L to flash rapidly, or to increase the brightness of lighting in order to notify the user of the fact that the remaining power of the first battery 24L is low in an emphasized manner. Alternatively, in order to notify the user of the fact that the second battery lid 25R was opened erroneously, the control microcomputer 37 may cause the remaining battery power display portion 27R or 17R of the second battery 24R to perform a special operation (e.g., flashing or increasing in brightness). It is, of course, possible to cause both of the remaining battery power display portions to flash or increasing in brightness. By notifying the user of an error through the operation of the remaining battery power display portions in this way, it is possible to prevent the user from removing the second battery 24R erroneously.

Alternatively, the remaining power of the first battery 24L may be displayed when the second battery lid 25R is open. For example, when the user opens the second battery lid 25R, the remaining power of the first battery 24L is displayed on the display portion 13 under the control of the control microcomputer 37. By knowing the remaining power of the first battery 24L, the user can decide not to remove the second battery 24R when the remaining power of the first battery 24L is excessively low, or can replace the second battery 24R for the meantime, when the remaining power of the first battery 24L is low but is at a certain level. By displaying the remaining power of the first battery 24L to the user, it is possible to inform the user of the fact that the lid was erroneously opened, and to give the user the discretion to decide whether or not to continue replacing the battery.

In the above-described example, when one of the battery lids is open, an alert is issued if the remaining power of the other battery is low. However, the operation of the information processing equipment may be shifted to a standby mode after issuing an alert, or instead of issuing an alert. This makes it possible to prevent the power supply from being stopped suddenly even if the user did not notice the alert.

It is also possible to adopt a configuration in which an alert is issued, for example, through the control microcomputer 37 making the remaining battery power display portion flash when the battery lid has been opened, regardless of the state of the remaining power or the like. The reason is that a battery lid may open when the user did not intend for it to do so. In such a case, the user can be informed about the opening of a battery lid through the operation of the remaining battery power display portions, so that it is possible to prevent a battery lid from being left open.

The configuration described by the above-described example mainly uses the front remaining battery power display portions 17L and 17R, as well as the rear remaining battery power display portions 27L and 27R as the alert output portion for the user. However, the means for issuing an alert to the user is not limited to these. For example, an alert may be issued by providing a special display mode for the first remaining battery power display icon 19L and the second remaining battery power display icon 19R displayed on the display portion 13. It is also possible to display an alert message on the display portion 13. Alternatively, in the case where a speaker or the like further is provided as the alert output portion, it is also possible to issue an alert through output of a voice message or an alert sound.

As described above, according to the present invention, an opening or closing motion of the lid portions is electromagnetically detected at the sensing portions, and the battery from which power is drawn is changed at the power-drawing portion based on the detection result. Accordingly, in the information processing equipment, it is possible to increase stability during the operation of switching between a plurality of housed batteries, and to realize a stable continuous operation for a long period. Furthermore, since the battery switching operation is performed using electronic switches, it is possible to maintain the reliability of the switching operation for the batteries used in the information processing equipment for a long period.

In the above-described configuration, batteries capable of independently supplying power to the PDA 10 are used, and the same number of lids as the batteries is provided. However, for example, when a plurality of batteries are used simultaneously to supply power to the PDA 10, it is possible to realize a similar configuration by reading a single battery described in this embodiment as a plurality of batteries used simultaneously.

Although two batteries are housed in the PDA 10 in the above-described configuration, it is also possible to realize a similar configuration by housing three or more batteries, and this configuration can achieve the same effect as described above.

In addition, although the PDA 10 has been described as an example, the configuration described in the present invention can also be used widely for other electronic devices such as various information terminals and portable information equipment.

### Charge/Discharge Control Method 1

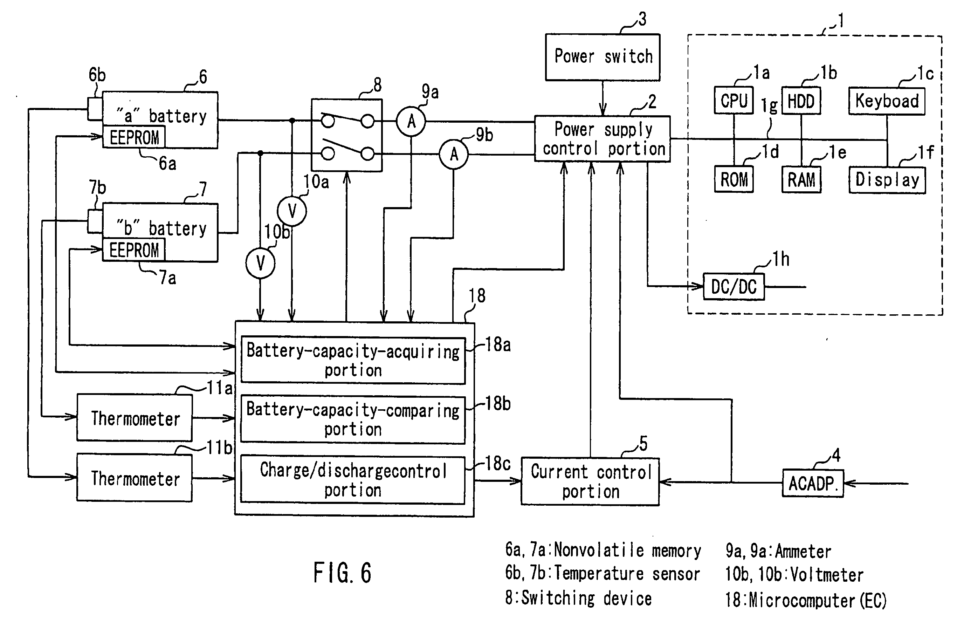

A charge/discharge control method for the batteries when the battery lids are closed will be described below. FIG. 6 is a diagram showing an electrical configuration of the PDA 10. As shown in FIG. 6, the PDA 10 includes an information processing portion 1 having a word processor functionality, an Internet functionality and another functionality, and other power supply portions.

In the information processing portion 1, a CPU 1a is a central processing unit that controls the entire PDA 10. An OS and various application software programs are stored in an HDD (hard disk drive) 1b, along with various data. A keyboard 1c is used, for example, for inputting data, and for giving instructions to the information processing portion 1 using a pointing device or various operation buttons 15 included in the PDA 10. A basic operation program such as a BIOS is contained in a ROM 1d. A RAM le operates as the main memory of the CPU 1a. A display 1f displays characters, graphics and the like. These components denoted by numerals 1a to 1f are connected together with a bus 1g, and transmit information to each other. A DC/DC converter 1h supplies power at a required voltage to each of the components denoted by numerals 1a to 1f.

The other power supply portions include a power supply control portion 2 connected to the bus 1g, a power switch 3, an external AC adapter 4 that supplies power to the power supply control portion 2, a current control portion 5, and an "a" battery 6 serving as a first battery (corresponding to the first battery 24L), a "b" battery 7 serving as a second battery (corresponding to the second battery 24R), a switching device 8, ammeters 9a and 9b, voltmeters 10a and 10b, thermometers 11a and 11b, and a microcomputer 18.

Furthermore, an "a" battery 6 and a "b" battery 7 respectively are provided with nonvolatile memories 6a and 7a, such as EEPROMs (Electrically Erasable Programmable Read Only Memories), and temperature sensors 6b and 7b.

Here, the switching device 8 controls the respective connections of the "a" battery 6 and the "b" battery 7 to the power supply control portion 2. The ammeters 9a and 9b measure the currents of the "a" battery 6 and the "b" battery 7 respectively, and input the measurement results to the microcomputer 18 in the form of digital signals. Similarly, the voltmeters 10a and 10b measure the voltages of the "a" battery 6 and the "b" battery 7 respectively, and input the measurement results to the microcomputer 18 in the form of digital signals. Further, the temperature sensors 6b and 7b sense the temperatures of the "a" battery 6 and the "b" battery 7 respectively, and the thermometers 11a and 11b input those temperatures into the microcomputer 18 in the form of digitized temperature signals. In addition, the nonvolatile memories 6a and 7a also are connected to the microcomputer 18.

The microcomputer 18 usually is called an "EC" (embedded controller), and contains a battery-capacity-acquiring portion 18a, a battery-capacity-comparing portion 18b, and a charge/discharge control portion 18c, which are described in detail later.

The microcomputer 18 is configured such that the output of the charge/discharge control portion 18c controls the switching device 8 and the current control portion 5, and the output of the battery-capacity-comparing portion 18b executes the below-described display on the display 1f via the power supply control portion 2.

With a configuration as described above, power supply to the information processing portion 1 is first carried out by supplying power from the "a" battery 6 or the "b" battery 7, and the AC adapter 4, and the power supply control portion 2 connected to the bus 1g manages these power supplying operations. When the AC adapter 4 is not connected, the power supply control portion 2 supplies power from the "a" battery 6 or the "b" battery 7 to the DC/DC converter 1h. When the AC adapter 4 is connected, the power supply control portion 2 supplies power from the AC adapter 4 to the DC/DC converter 1h. When the "a" battery 6 or the "b" battery 7 requires charging, the power supplied by the current control portion 5 is used to charge each of the batteries.

When the battery capacities of the "a" battery 6 and the "b" battery 7 have become low, or when the power switch 3 is turned off, an instruction is given to the CPU 1a to perform a shutdown operation and, thereafter, power supply to the DC/DC converter 1h is stopped.

Charging of the "a" battery 6 and the "b" battery 7 is executed by the current control portion 5 controlling the current of the power supplied from the AC adapter 4 via the switching device 8. These operations are controlled by the charge/discharge control portion 18c.

Note that the functionality of the control microcomputer 37 shown in FIG. 3 may be incorporated in the microcomputer 18 shown in FIG. 6. In that case, the switching device 8 shown in FIG. 6 also has the functionality of the power-drawing portion 36 shown in FIG. 4. In this embodiment, an example is described in which control of the charge/discharge control portion 18c is performed, in addition to the control of the switching device 8 by the control microcomputer 37. That is, the control of the switching device 8 by the charge/discharge control portion 18c is performed when the lids of the "a" battery 6 and the "b" battery 7 are closed. When an opening or closing motion of either the "a" battery 6 or the "b" battery 7 has been sensed, the above-described switching control by the control microcomputer 37 is performed.

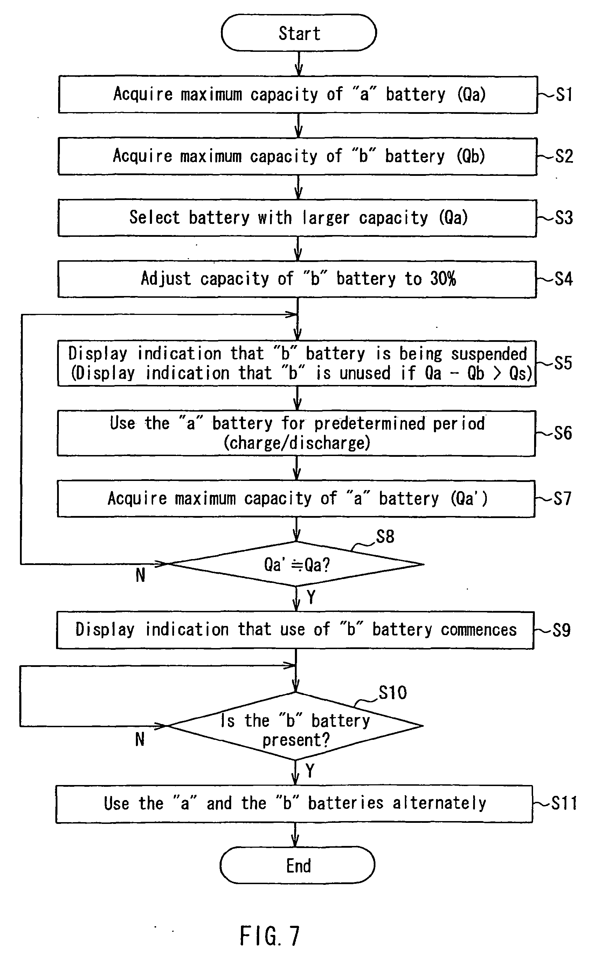

A charge/discharge control method for a plurality of batteries now will be described using the flowchart of FIG. 7 with reference to FIG. 6 and FIGS. 8 to 9.

In Step S1, the battery-capacity-acquiring portion 18a acquires the maximum battery capacity of the "a" battery 6. This can be performed, for example, in the following manner.

First, the battery-capacity-acquiring portion 18a causes the "a" battery 6 to discharge so that its battery capacity becomes empty (zero). At this time, the switching device 8 is on at the "a" battery 6 side as shown in FIG. 6, and the power of the "a" battery 6 is consumed in the information processing portion 1. The empty state of the battery capacity is sensed based on the battery voltage measured by the voltmeter 10a.

Then, the battery-capacity-acquiring portion 18a charges the "a" battery 6 with power supplied from the AC adapter 4 at a constant current value controlled by the current control portion 5, until the maximum battery capacity is reached. The sensing of the maximum battery capacity is performed through the sensing, for example, of a voltage gradient sensed by the voltmeter 10a, and an increasing gradient in the temperature measured by the thermometer 11a. A time integration value for the charge current measured by the ammeter 9a during this charging is computed to calculate a current-time product (ampere hour).

The battery-capacity-acquiring portion 18a acquires a true maximum battery capacity Qa, which is obtained by correcting the calculated current-time product value with the battery temperature.

Next, in Step S2, the maximum battery capacity Qb of the "b" battery 7 is acquired in the same manner as in Step S1.

Note that the maximum battery capacity values determined in Step S1 and Step S2 are written in the nonvolatile memories 6a and 6b, respectively

Next, in Step S3, the battery-capacity-comparing portion 18b compares the maximum battery capacities Qa and Qb of the "a" battery 6 and the "b" battery 7. Since a battery with a larger maximum battery capacity can be used to drive the PDA 10 for a longer number of hours per charge and has a larger number of cycles, the battery-capacity-comparing portion 18b selects the battery with the larger capacity (in this case, Qa > Qb).

Next, in Step S4, since it can be judged that the battery that has been determined to have a lower maximum battery capacity by the battery-capacity-comparing portion 18b has a small number of charging cycles and/or has deteriorated, the charge/discharge control portion 18c adjusts the "b" battery 7, which has a lower maximum battery capacity, to a predetermined battery capacity (for example, 30% of the maximum battery capacity) such that the "b" battery 7 can be used for a longer period and can be stored stably for a long period. That is, the charge/discharge control portion 18c disconnects the "a" battery 6 using the switching device 8 and connects the "b" battery 7 such that the power of "b" battery 7 is consumed in the information processing portion 1. When the battery capacity of the "b" battery 7 has reached a predetermined battery capacity (in this embodiment, 30%), the charge/discharge control portion 18c operates the switching device 8 so as to disconnect the "b" battery 7.

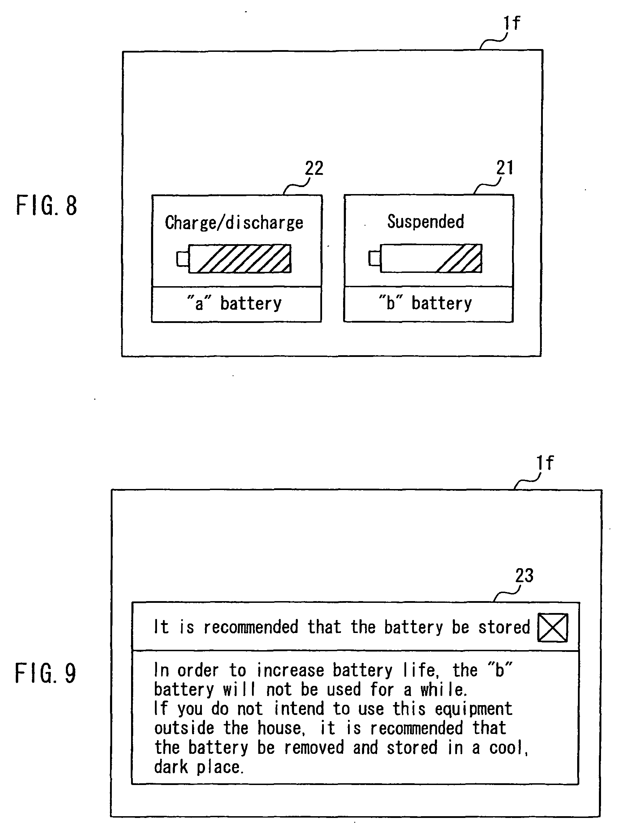

In the subsequent Step S5, an indication that the "b" battery 7 is being suspended is displayed on the display 1f as shown in indications 21 and 22 in FIG. 8. Similarly, an indication that the battery is being charged is displayed for the "a" battery 6.

When Qa - Qb, which is the difference in maximum battery capacity between the two batteries, is larger than a predetermined amount Qs at this point, for example, an indication that it is recommended that the "b" battery 7 be removed and stored in a cool, dark place, or be replaced with a new battery is displayed on the display 1f as shown by an indication 23 in FIG. 9.

Next, in Step S6, the switching device 8 connects the "a" battery 6, and the power necessary for the information processing portion 1 is supplied only from the "a" battery 6.

After this state (use with repeated charge and discharge) has continued for a predetermined period, the battery capacity acquiring portion 18a acquires the maximum battery capacity Qa' of the "a" battery 6 again in Step S7 in the same manner as in Step S1. When the maximum battery capacity Qa' of the "a" battery 6 becomes substantially equal to the maximum battery capacity Qb of the "b" battery 7 in Step S8, an indication that use of the "b" battery 7 is to commence (not shown) is displayed on the display 1f in Step S9. If attachment of the "b" battery 7 is confirmed in Step S10, the above described flow is repeated thereafter in Step S11, and the "a" battery 6 and the "b" battery 7 are used alternately.

In the foregoing description the "a" battery 6 is changed to the "b" battery 7 when Qa' becomes equal to Qb in Step S8. However, hysteresis may be provided when comparing the maximum battery capacities of the two batteries in Step S8, and the "a" battery 6 may be used until Qa' becomes smaller than Qb by a predetermined capacity value. In addition, the frequency of such acquisition of the maximum battery capacities of the batteries may be set appropriately, taking into consideration the usage environment and the usage frequency of the PDA 10.

As described above, according to the present invention, the maximum battery capacities of individual batteries are acquired and compared, then the battery with the largest battery capacity is selected, and only that battery is used for a predetermined period. Thereby, a plurality of batteries are used while keeping a balance between the maximum battery capacities of the batteries. Accordingly, it is possible to prevent any particular battery from being unusable before other batteries, thereby extending the life of the batteries as a whole. Furthermore, if a battery other than the selected battery are put into standby with a low battery capacity suitable for storage, including, for example, a predetermined battery capacity of about 30%, it is possible to prevent the life of the non-selected battery from being reduced unnecessarily.

The maximum battery capacity of the batteries is acquired by bringing the battery capacity from an empty state to a fully charged state. However, conversely, the maximum battery capacity may be acquired by bringing the battery capacity from a fully charged state to an empty state.

Although the maximum battery capacity of the "a" battery 6 is acquired in Step S7, as an alternative, the procedure may move to Step S9 after using the "a" battery 6 for a charging time or discharging time corresponding to the difference between the maximum battery capacities of the "a" battery 6 and the "b" battery 7 (Qa - Qb) obtained in Step S1 and Step S2.

Steps S1 and S2 may not necessarily be performed every charge/discharge cycle. For example, these steps may be performed every predetermined number of charge/discharge cycles (for example, five), only when a new battery is housed in the battery housing portions, or only when the housing lid of any of the battery housing portions is opened and then closed. In the case where Steps S1 and S2 are performed in a specific case as described above, the loop from Step S5 through Step S8 in FIG. 7 will be executed in an ordinary charging step. By performing such a charge/discharge step, it is possible to realize an increased life for each of the plurality of batteries, an increased useable number of hours per battery during which the information processing equipment can be battery driven, and/or a highly efficient charge/discharge for each of the plurality of batteries.

Although the charging, discharging, suspension and so on of the batteries are described as being indicated on the display of the information processing equipment, such indications may be performed using a plurality of LEDs or the like. Similarly, in the case where the difference in maximum capacity between two batteries is larger than a predetermined value, this can be indicated by flashing LEDs or the like rather than using a display.

### Charge/Discharge Control Method 2

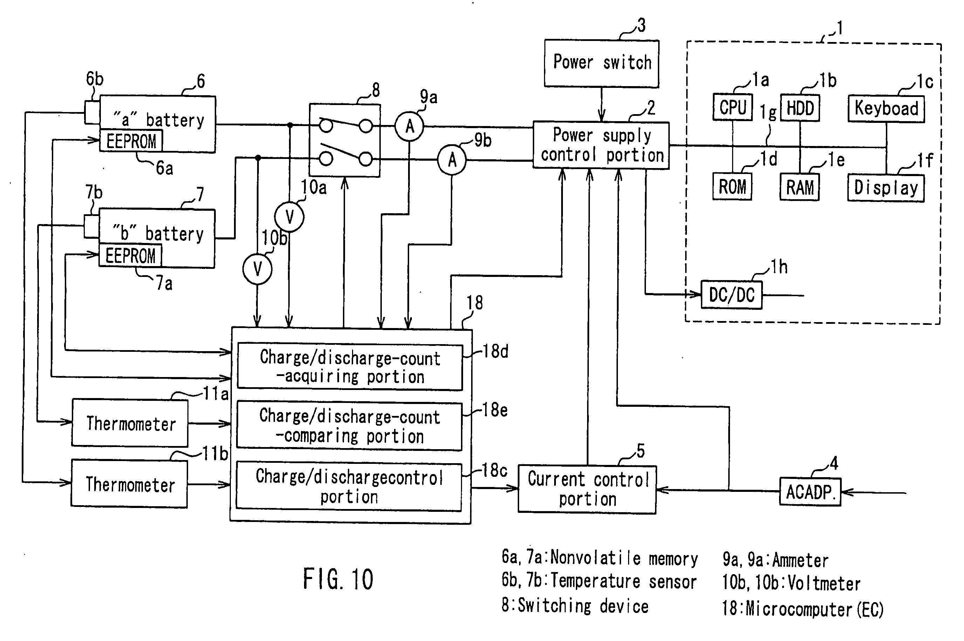

A charge/discharge control method for the batteries performed when the battery lids are closed will now be described for the case in which the charge/discharge count of the plurality of batteries are compared, and the battery being used is selected. FIG. 10 is a diagram showing an electrical configuration of a PDA 10.

The electrical configuration shown in FIG. 10 is basically the same as that shown in FIG. 6, but the means contained in the microcomputer 18 are different. The components denoted by the same numerals as those in FIG. 6 are the same as the components in FIG. 6 and therefore the description thereof has been omitted.

A charge/discharge-count-acquiring portion 18d, a
charge/discharge-count-comparing portion 18e, and the charge/discharge control portion 18c described in relation to FIG. 6 are provided in the microcomputer 18.

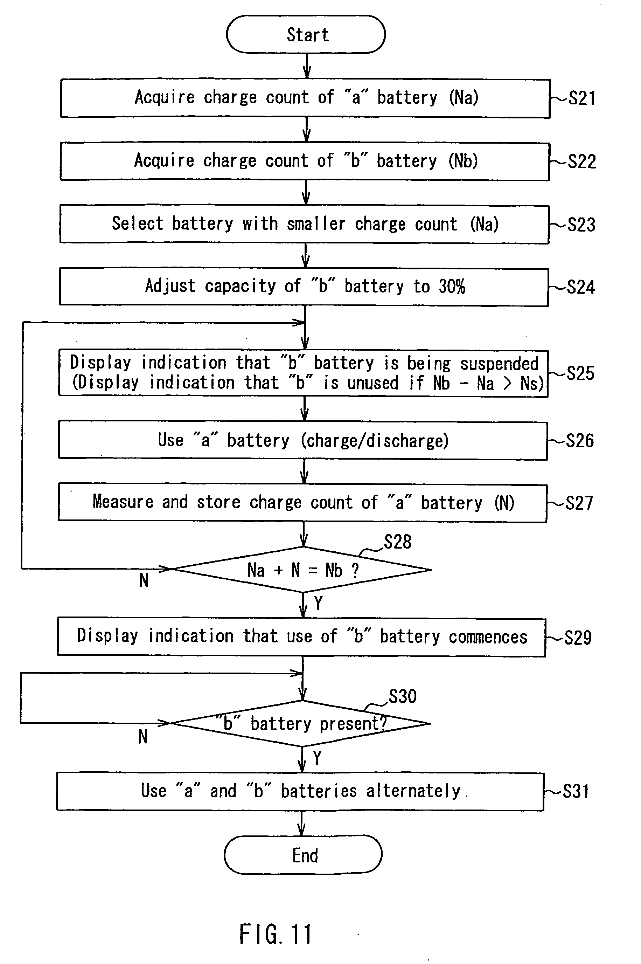

With reference to FIG. 10 and FIGS. 8 and 9 described above, a charge/discharge control method for a plurality of batteries will be described using the flowchart in FIG. 11.

In Step S21, the charge/discharge-count-acquiring portion 18d acquires a charge or discharge count, Na, stored in the nonvolatile memory 6a of the "a" battery 6.

Next, in Step S22, the charge/discharge-count-acquiring portion 18d acquires a charge or discharge count, Nb, stored in the nonvolatile memory 7a of the "b" battery 7 in the same manner as in Step S21.

Next, in Step S23, the charge/discharge-count-comparing portion 18e compares the charge or discharge counts, Na and Nb, of the "a" battery 6 and the "b" battery 7. Since the battery with a smaller charge/discharge count has a larger maximum battery capacity, and can be used to drive the PDA 10 for a longer number of hours per charge and has a longer life, the charge/discharge-count-comparing portion 18e selects the battery with a smaller charge/discharge count (in this case, Na < Nb).

Next, in Step S24, since it can be judged that the battery that has been determined to have a larger charge/discharge count by the charge/discharge-count-comparing portion 18e has a lower maximum battery capacity and/or has deteriorated, the charge/discharge control portion 18c adjusts "b" battery 7, which has a larger charge/discharge count, to a predetermined battery capacity (for example, 30% of the maximum battery capacity) such that "b" battery 7 can be stored stably for a long period, in order to suppress the progress of deterioration in the "b" battery 7. That is, the charge/discharge control portion 18c disconnects "a" battery 6 using the switching device 8 and connects "b" battery 7 such that the power of "b" battery 7 is consumed in the information processing portion 1. When the battery capacity of "b" battery 7 has reached 30%, the charge/discharge control portion 18c operates the switching device 8 so as to disconnect "b" battery 7.

In the subsequent Step S25, an indication that "b" battery 7 is being suspended is displayed on the display 1f as shown in indications 21 and 22 in FIG. 8. Similarly, an indication that the battery is being charged or discharged is displayed for "a" battery 6.

When Nb - Na, which is the difference in the above-described count between the two batteries, is larger than a predetermined value Ns at this point, for example, an indication that it is recommended that "b" battery 7 be removed and stored in a cool, dark place, or be replaced with a new battery is displayed on the display 1f as shown by an indication 23 in FIG. 9.

Next, in Step S26, the switching device 8 connects "a" battery 6, and the power necessary for the information processing portion 1 is supplied only from "a" battery 6.

In Step S27, the charge or discharge count N of the "a" battery 6 is measured, and the result is added and stored in the nonvolatile memory 6a.

When the charge or discharge count Na + N of the "a" battery 6 becomes equal to the charge or discharge count Nb of "b" battery 7 in the subsequent Step S28, an indication that use of "b" battery 7 commences (not shown) is displayed on the display 1 in Step S29. Next, if attachment of "b" battery 7 is confirmed in Step S30, the above described flow is repeated thereafter in Step S31, and "a" battery 6 and "b" battery 7 are used alternately.

In the foregoing description, "a" battery 6 is switched to "b" battery 7 when Na + N becomes equal to Nb in Step S28. However, hysteresis may be provided when comparing the charge/discharge counts of the two batteries in Step S28, and "a" battery 6 may be used until Na + N becomes larger than Nb by a predetermined count. In addition, the frequency of acquiring the charge/discharge count of the batteries may be appropriately set in consideration of the environment of usage and the frequency of usage of the PDA 10.

As described above, according to the present invention, the charge or discharge counts of individual batteries are acquired and compared, the battery with the smallest charge/discharge count is selected, and only the selected battery is used repeatedly until its charge or discharge count reaches that of the other batteries.

It is known that the deterioration of a battery generally advances in proportion to the charge/discharge count, and the degree of deterioration in batteries can be leveled by equalizing the charge/discharge counts of the individual batteries. This can produce an effect, for example, in the following case.

When one of the plurality of batteries attached to the PDA 10 has been used as an auxiliary battery of another PDA 10 of the same kind, and then attached again to the PDA to which it was originally attached, whether or not the charge/discharge counts of the batteries are unbalanced can be checked immediately, and modification can be made so as to balance the charge/discharge counts. Accordingly, it is possible to suppress the progress of deterioration in the plurality of batteries as a whole. This is made possible by storing the charge/discharge counts in the batteries.

The charge/discharge count has been described as being stored in the nonvolatile memories in the batteries. However, in the case where the batteries are used for a specific PDA, the charge/discharge count may be stored in a nonvolatile memory included in the PDA itself.

### Charge Control Method

In addition, it is known that the degree of deterioration in a battery increases when the battery is used in a highly charged state. In particular, the degree of deterioration is large when a battery is used in the fully charged state (the state in which a battery is charged to its maximum capacity). Therefore, a case will be described in which the life of a battery is increased by avoiding such a fully charged state.

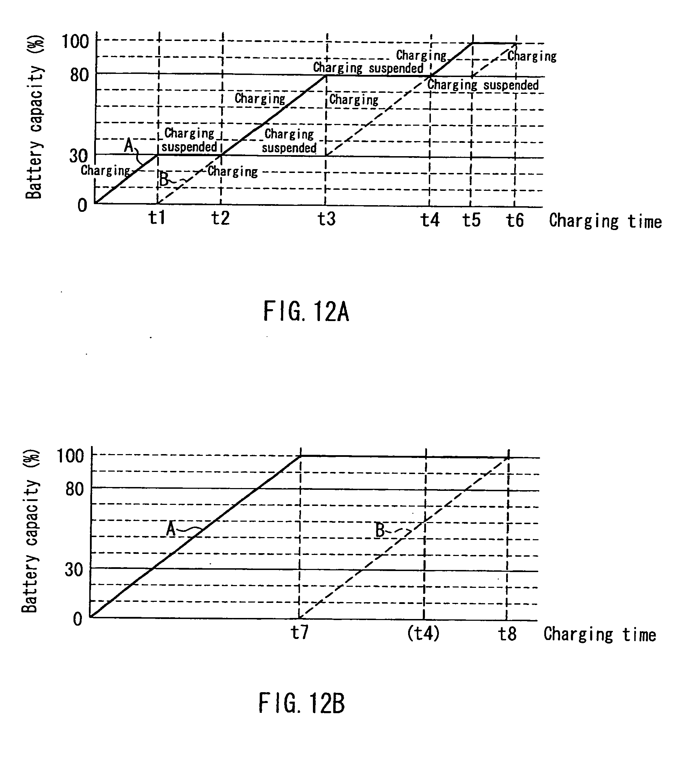

FIG. 12A schematically shows the progress of charging, illustrating a charge control method, with the charging time plotted on the horizontal axis and the progress of charging plotted on the vertical axis.

In FIG. 12A, characteristic A (solid line) indicates the progress of charging for the "a" battery 6, characteristic B (dotted line) indicates the progress of charging for the "b" battery 7. For the sake of ease of illustration, the battery capacity at which each battery has been spent is indicated as zero for both of the batteries.

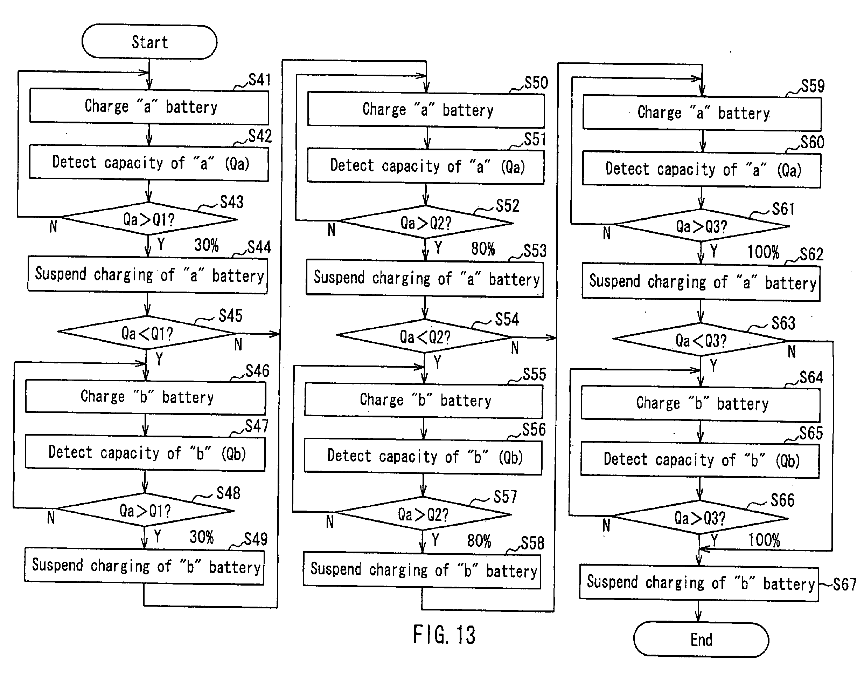

With reference to FIG. 12A, the charge control method will be described in detail using the flowchart in FIG. 13.

In Step S41, the "a" battery 6 is charged. In Step S42, the battery capacity Qa of the "a" battery 6 is successively detected. When the battery capacity Qa of the "a" battery 6 has risen above a predetermined value Q1 (in FIG. 13, 30%) in Step S43, the charging of the "a" battery 6 is suspended in Step S44 (Time t1 in FIG. 12A). Next, in Step S45, whether or not the battery capacity Qb of the other battery is lower than the predetermined value Q1 is checked. Since the "b" battery 7 has an battery capacity of zero (YES), the procedure moves to Step S46, in which the charging of the "b" battery 7 commences. In Step S47, the battery capacity Qb is successively detected, and when the battery capacity Qb has risen above the predetermined value Q1 in Step S48, the charging of the "b" battery 7 is suspended in Step S49 (Time t2 in FIG. 12A).

Note that when the battery capacity Qb of the "b" battery 7 is above the predetermined value Q1 (NO) in Step S45, the charging of the "b" battery 7 in Step S46 is not performed, and the procedure jumps to Step S50.

Next, in Step S50, the "a" battery 6 is charged again, and the battery capacity Qa is successively detected in Step S51. When the battery capacity Qa has risen above a second predetermined value Q2 (in FIG. 13, 80%) in Step S52, the charging of the "a" battery 6 is suspended in Step S53 (Time t3 in FIG. 12A).

Next, in Step S54, whether or not the battery capacity Qb of the other battery is lower than the predetermined value A2 is checked. If a battery with an battery capacity lower than the predetermined value Q2 is not present at this time, the procedure moves to Step S59, in which charging is continued. However, since the battery capacity of the "b" battery 7 remains at 30% (YES), the procedure moves to the subsequent Step S55, in which the charging of the "b" battery 7 commences. In Step S56, the battery capacity Qb is successively detected, and when the battery capacity Qb has risen above the predetermined value Q2 in Step S57, the charging of the "b" battery 7 is suspended in Step S58 (Time t4 in FIG. 12A).

Next, in Step S59, the "a" battery 6 is charged again, and the battery capacity Qa is successively detected in Step S60. When the battery capacity Qa has risen above a third predetermined value Q3 (in FIG. 13, 100%) in Step S61, the charging of the "a" battery 6 is suspended in Step S62 (Time t5 in FIG. 12A).

Next, in Step S63, whether or not the battery capacity Qb of the other battery is lower than the predetermined value Q3 is checked. Since the "b" battery 7 is maintained at an battery capacity of 80% (YES), the procedure moves to Step S64, in which the charging of the "b" battery 7 commences. In Step S65, the battery capacity Qb is successively detected, and when the battery capacity Qb has risen above the predetermined value Q3 in Step S66, the charging of the "b" battery 7 is suspended in Step S67 (Time t6 in FIG. 12A).

As described above, according to the present invention, a plurality of charging targets (battery capacities) are set, and a plurality of batteries are charged in ascending order of their capacity values until they reach the closest charging target. This provides an effect as described below.

FIG. 12B shows a conventional method in which the "a" battery is fully charged as indicated by characteristic A (solid line), and then the "b" battery is charged as indicated by characteristic B (dotted line).

The temporal axis in FIG. 12B is plotted to the same scale as the temporal axis in FIG. 12A.

As can be clearly seen from a comparison of FIGS. 12A and 12B, the time for which the batteries are held in the fully charged (100% charged) state, which adversely affects the battery life, is significantly reduced in this embodiment, as compared with the conventional method.

Furthermore, as clearly shown in FIG. 12A, the difference in battery capacity between the individual batteries during charging is reduced. Accordingly, the difference in capacity between the batteries is reduced when charging is stopped midway, and the degree of deterioration can be leveled when the batteries are left standing thereafter.

Furthermore, the period for which some of the batteries are maintained in the fully charged state is shortened, so that it is possible to prevent any particular battery from deteriorating rapidly.

For example, when the charging operation is stopped at Time t4 in FIG. 12B, the "a" battery 6 is charged to 100%, and "b" battery 7 is charged to 60%, and the sum of the battery capacities of the two batteries is 160%.

Similarly, when the charging operation is stopped at Time t4 in FIG. 12A, the "a" battery 6 is charged to 80%, and the "b" battery 7 is charged to 80%, and the sum of the battery capacities of the two batteries is also 160%.

That is, according to the present invention, when the charging operation is stopped midway and the batteries are left standing thereafter, it is possible to reduce the chances of one of the batteries being fully charged, thereby minimizing the possibility of an extreme deterioration in the battery that could result from leaving the battery in a fully charged state.

Furthermore, according to this method, in a mode in which a plurality of (for example, two) batteries are switched to drive information processing equipment such as the PDA 10, each of the batteries can be charged to, for example, approximately 50% of the maximum battery capacity. In this case, the sum of the battery capacities of the two batteries is 100% as with the conventional method. However, compared with the conventional method in which one of the batteries is charged to 100% and the other battery is charged to 0%, the method of the present invention can suppress the deterioration of the plurality of batteries more effectively, even though the charging time and the driving time of the information processing equipment are the same as the conventional method.

In addition, although FIGS. 12A and 12B show the same gradient, it is known that in practice the charging efficiency decreases at the last stages of charging (a state close to the fully charged state). Therefore, as compared with a conventional configuration in which one of the batteries is fully charged and maintained in the fully charged state until the battery capacity of the other battery is reduced, a configuration in which the battery capacity to be charged is shared by a plurality of batteries and the individual batteries are charged to a low capacity can achieve higher charging efficiency and thus can contribute to energy savings, even though the sums of the battery capacities are the same.

### Discharge Control Method

Another example will now be described in which the period for which the fully charged state is maintained is minimized to increase the battery life.

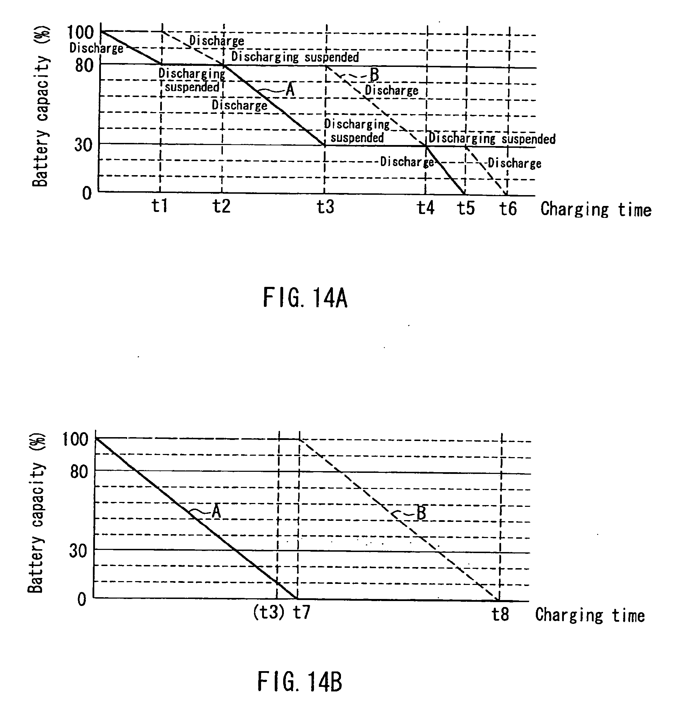

FIG. 14A schematically shows the progress of discharging, illustrating a discharge control method, with the discharge time plotted on the horizontal axis and the progress of discharging plotted on the vertical axis.

In FIG. 14A, characteristic A (solid line) indicates the progress of discharging of "a" battery 6, characteristic B (dotted line) indicates the progress of discharging of "b" battery 7. For the sake of ease of illustration, the discharging is performed from an battery capacity of 100%, which is the fully charged capacity, to an battery capacity of 0%, which is the battery capacity of the battery that has been spent, for both of the batteries.

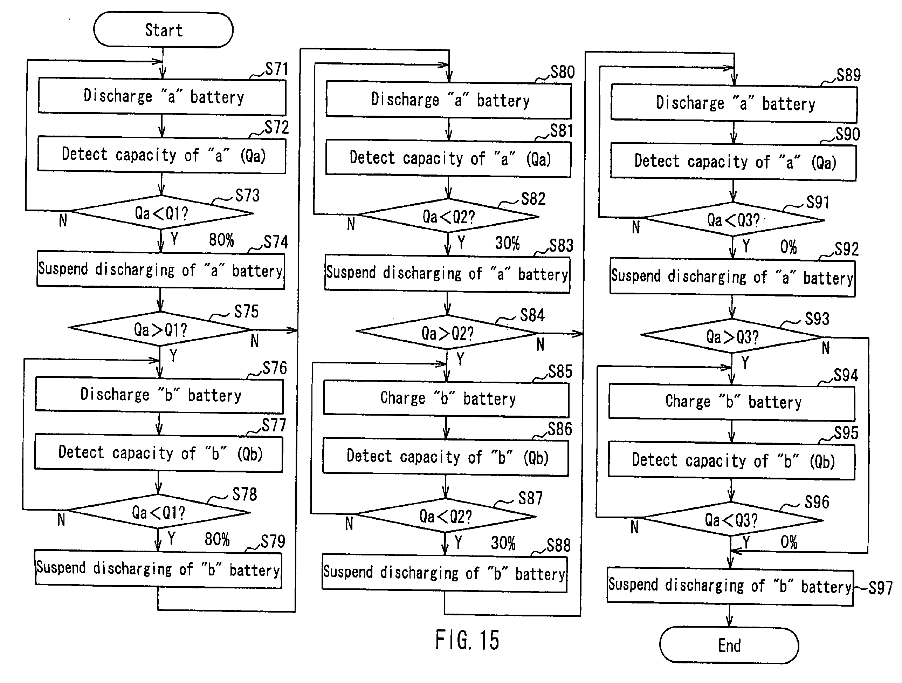

With reference to FIG. 14A, the discharge control method will be described in detail using the flowchart in FIG. 15.

In Step S71, "a" battery 6 is discharged. In Step S72, the battery capacity Qa of "a' battery 6 is successively detected. When the battery capacity Qa of "a" battery 6 has fallen below a predetermined value Q1 (in FIG. 15, 80%) in Step S73, the discharging of "a" battery 6 is suspended in Step S74 (Time t1 in FIG. 14A). Next, in Step S75, whether or not the battery capacity Qb of the other battery is larger than the predetermined value Q1 is checked. Since "b" battery 7 has an battery capacity of 100% (YES), the procedure moves to Step S76, in which the discharging of "b" battery 7 commences. In Step S77, the battery capacity Qb is successively detected, and when the battery capacity Qb has fallen below the predetermined value Q1in Step S78, the discharging of "b" battery 7 is suspended in Step S79 Time t2 in FIG. 14A).

Note that when the battery capacity Qb of "b" battery 7 is less than the predetermined value Q1 (NO) in Step S75, the discharging of "b" battery 7 in Step S76 is not performed, and the procedure jumps to Step S80.

Next, in Step S80, "a" battery 6 is discharged again, and the battery capacity Qa is successively detected in Step S81. When the battery capacity Qa has fallen below a second predetermined value Q2 (in FIG. 15, 30%) in Step S82, the discharging of "a" battery 6 is suspended in Step S83 (Time t3 in FIG. 14A).

Next, in Step S84, whether or not the battery capacity Qb of the other battery is larger than the predetermined value Q2 is checked. If a battery with an battery capacity larger than the predetermined value Q2 is not present at this time, the procedure moves to Step S89, in which the discharging is continued. However, since the battery capacity of "b" battery 7 remains at 80% (YES), the procedure moves to the subsequent Step S85, in which the discharging of "b" battery 7 commences. In Step S86, the battery capacity Qb is successively detected, and when the battery capacity Qb has fallen below the predetermined value Q2 in Step S87, the discharging of "b" battery 7 is suspended in Step S88 (Time t4 in FIG. 14A).

Next, in Step S89, "a" battery 6 is discharged again, and the battery capacity Qa is successively detected in Step S90. When the battery capacity Qa has reached a third predetermined value Q3 (in FIG. 15, 0%) in Step S91, the discharging of "a" battery 6 is suspended in Step S92 (Time t5 in FIG. 14A).

Next, in Step S93, whether or not the battery capacity Qb of the other battery is larger than the predetermined value Q3 is checked. Since "b" battery 7 is maintained at an battery capacity of 30% (YES), the procedure moves to Step S94, in which the discharging of "b" battery 7 commences. In Step S95, the battery capacity Qb is successively detected, and when the battery capacity Qb has reached the predetermined value Q3 in Step S96, the discharging of "b" battery 7 is suspended in Step S97 (Time t6 in FIG. 14A).

As described above, according to the present invention, a plurality of discharging targets (battery capacities) are set, and a plurality of batteries are discharged in descending order of their capacity values until they reach the closest discharging target, and the plurality of batteries with an equalized capacity value are further discharged sequentially to a lower discharging target. This provides an effect as described below.

FIG. 14B shows a conventional method in which the "a" battery 6 is discharged to a capacity of 0% as indicated by characteristic A (solid line), and then the "b" battery 7 is discharged as indicated by characteristic B (dotted line).

The temporal axis in FIG. 14B is plotted in the same scale as the temporal axis in FIG. 14A.

As can be clearly seen from comparison of FIGS. 14A and 14B, the time for which the batteries are held in the fully charged (100% charged) state, which adversely affects the battery life, is significantly reduced in this embodiment, as compared with the conventional method.

Furthermore, as clearly shown in FIG. 14A, the difference in battery capacity between the individual batteries during discharging is reduced. Accordingly, the difference in capacity between the batteries is reduced when the discharging is stopped (when the use of the information processing equipment is stopped), and the degree of deterioration can be leveled.

Furthermore, the period for which some of the batteries are maintained in the fully charged state is shortened, so that it is possible to prevent any particular battery from deteriorating rapidly.

When the discharging operation is stopped at Time t3 in FIG. 14B, "a" battery 6 is charged to a capacity of 10%, and "b" battery 7 is charged to a capacity of 100% (fully charged), and the sum of the battery capacities of the two batteries is 110%.

Similarly, when the discharging operation is stopped at Time t3 in FIG. 14A, "a" battery 6 has an battery capacity of 30%, and "b" battery 7 has an battery capacity of 80%, and the sum of the battery capacities of the two batteries is also 110%.

That is, according to the present invention, when the discharging operation is stopped midway and the batteries are left standing thereafter, it is possible to reduce the period for which one of the batteries is maintained in the fully charged state, thereby minimizing the possibility of an extreme deterioration of the batteries that could result from leaving the batteries in the fully charged state.

Although the above-described target capacities during charging/discharging are set in three steps, namely, 30%, 80% and 100%, the target capacity, the number of steps and the like are not limited thereto, and may be set appropriately in an optimum manner depending on the state of use. The configurations shown in the above-described embodiment merely illustrate specific examples, and are not to be construed as limiting the technical scope of the present invention. Any configuration may be adopted as long as the effects of the invention can be achieved.

### Charge/Discharge Control Method 3

Another exemplary case will be described in which the life of a battery is increased by avoiding a fully charged state. In this example, the capacity zone to which each remaining capacity of the "a" battery 6 and the "b" battery 7 belongs is determined, and the charge/discharge control of the "a" battery 6 and the "b" battery 7 is carried out based on the capacity zones to which the remaining capacities thereof are determined to belong (e.g., a zone of 0 % to 30 %, a zone 30 % to 60 %, and a zone of 60 % to 80 %).

Here, a range of a possible remaining capacity value of a battery is divided into two or more regions, and each region is assumed to be a capacity zone. In the present embodiment, each capacity zone is expressed as a range in percentages, but it may be expressed as a range of capacity values. The capacity zone preferably is set according to the manner of use of the battery or the purpose of use thereof appropriately. Each capacity zone can be expressed, for example, by an upper limit value and a lower limit value of a capacity.

First, in Step S81, the battery capacity acquiring portion 18a acquires capacity zones of the "a" battery 6 and the "b" battery 7. The battery capacity acquiring portion 18a acquires, as the capacity zones, the ranges of possible values of the battery capacities, which are set according to the acquired battery capacities.

Next, in Step S82, the charge/discharge control portion 18c determines whether or not the capacity zone of the "a" battery 6 is different from the capacity zone of the "b" battery 7.

When it is determined in Step S82 that the capacity zones thereof are different from each other, the procedure moves to Step S83, where the charge/discharge control portion 18c determines whether or not charging is being executed.

When it is determined in Step S83 that charging is being executed, the procedure moves to Step S84, where the charge/discharge control portion 18c determines whether or not the capacity zone of the "a" battery 6 is a zone for a smaller capacity, as compared with the capacity zone of the "b" battery 7.

When it is determined in Step S84 that the capacity zone of the "a" battery 6 is a zone for a smaller capacity, the procedure moves to Step S85, where the charge/discharge control portion 18c selects the "a" battery 6 and charges the same. When it is determined in Step S84 that the capacity zone of the "a" battery 6 is not a zone for a smaller capacity, the procedure moves to Step S86, where the charge/discharge control portion 18c selects the "b" battery 7 and charges the same.

On the other hand, when it is determined in Step S83 that charging is not being executed, the procedure moves to Step S87, where the charge/discharge control portion 18c determines whether or not discharging is being executed. When it is determined in Step S87 that discharging is not being executed, the charge/discharge control portion 18c ends the procedure. When it is determined in Step S87 that discharging is being executed, the procedure moves to Step S88, where the charge/discharge control portion 18c determines whether or not the capacity zone of the "a" battery 6 is a zone for a greater capacity, as compared with the capacity zone of the "b" battery 7.

When it is determined in Step S88 that the capacity zone of the "a" battery 6 is a zone for a greater capacity, the procedure moves to Step S85, where the charge/discharge control portion 18c selects the "a" battery 6 and discharges the same. When it is determined in Step S88 that the capacity zone of the "a" battery 6 is not a zone for a greater capacity, the procedure moves to Step S86, where the charge/discharge control portion 18c selects the "b" battery 7 and discharges the same.

When it is determined in Step S82 that the capacity zones thereof are the same, the procedure moves to Step S89, where the charge/discharge-count-comparing portion 18e determines whether or not a charge/discharge count of the "a" battery and a charge/discharge count of the "b" battery, which are obtained by the the charge/discharge-count-acquiring portion 18d, are equal to each other.

When it is determined in Step S89 that the charge/discharge counts are equal, the procedure moves to Step S85, where the charge/discharge control portion 18c continuously charges/discharges the currently used battery.

On the other hand, when it is determined in Step S89 that the charge/discharge counts are different, the procedure moves to Step S90, where the charge/discharge-count-comparing portion 18e determines whether or not the charge/discharge count of the "a" battery is greater than the charge/discharge count of the "b" battery.

When it is determined in Step S90 that the charge/discharge count of the "a" battery is not greater, the procedure moves to Step S85, where the charge/discharge control portion 18c selects the "a" battery 6 and charges/discharges the same. When it is determined in Step S90 that the charge/discharge count of the "a" battery is greater, the procedure moves to Step S86, where the charge/discharge control portion 18c selects the "b" battery 7 and charges/discharges the same.

In the present charge/discharge control method 3, in Step S81, a plurality of batteries are classified under preliminarily set capacity zones as battery capacity ranges, based on the respective battery capacities of the batteries. Therefore, as long as the selected batteries belong to the same zone, the step of comparing the batteries in the same zone with one another can be omitted. Therefore, the complexity in comparing each of capacities with another according to the states of use (charge or discharge) of each battery can be eliminated, whereby an effect of excellent practical utility can be achieved.

Note that since the present charge/discharge control method 3 is described as to a case where two batteries, i.e., the "a" battery and the "b" battery, are used, the comparison of battery capacity values of batteries belonging to the same zone is omitted in Steps S84 and S88. But in the case where a plurality of batteries belong to the same zone, a step is added for comparing the battery capacity values of the plurality of batteries belonging to the selected zone in Steps S84 and S88.

Likewise, the comparison of the charge/discharge counts of batteries belonging to the same zone is omitted in Steps S89 and S90. But in the case where a plurality of batteries belong to the same zone, steps for comparing the charge/discharge counts of the plurality of batteries belonging to the selected zone are added between Step S82 and Step S89, as is the case with Steps S89 and S90.

Note that in the present charge/discharge control method 3, the capacity zones of 0 % to 30 %, 30 % to 60 %, and 60 % to 80% are set, but the upper limit value and the lower limit value of each zone may be set appropriately according to an information processing device used. Besides, the spending of the battery to the capacity of 0 % also is known as a factor that reduces the life of the battery, as is the case with the fully charged state. Therefore, by changing the limit of "0 %" of the above-described capacity zone to about "10 %", the life of a battery can be increased.

### Charge/Discharge Control Method 4

Still another exemplary case will be described in which the life of a battery is increased by avoiding a fully charged state. In this example also, it is determined to which capacity zone each remaining capacity of an "a" battery 6 and a "b" battery 7 belongs, and the charge/discharge control of the "a" battery 6 and the "b" battery 7 is carried out based on the capacity zones that the remaining capacities thereof are determined to belong (e.g., a zone of 0 % to 30 %, a zone 30 % to 60 %, and a zone of 60 % to 80 %).

First, in Step S101, the battery-capacity-acquiring portion 18a acquires capacity zones of the "a" battery 6 and the "b" battery 7.

Next, in Step S102, the charge/discharge control portion 18c determines whether or not the capacity zone of the "a" battery 6 is different from the capacity zone of the "b" battery 7.

When it is determined in Step 102 that the capacity zones thereof are different, the procedure moves to Step S103, where the charge/discharge control portion 18c determines whether or not charging is being executed.

When it is determined in Step S103 that charging is being executed, the procedure moves to Step S104, where the charge/discharge control portion 18c determines whether or not the capacity zone of the "a" battery 6 is a zone for a smaller capacity, as compared with the capacity zone of the "b" battery 7.

When it is determined in Step S104 that the capacity zone of the "a" battery 6 is a zone for a smaller capacity, the procedure moves to Step S105, where the charge/discharge control portion 18c selects the "a" battery 6 and charges the same. When it is determined in Step S104 that the capacity zone of the "a" battery 6 is not a zone for a smaller capacity, the procedure moves to Step S106, where the charge/discharge control portion 18c selects the "b" battery 7 and charges the same.

On the other hand, when it is determined in Step S103 that charging is not being executed, the procedure moves to Step S107, where the charge/discharge control portion 18c determines whether or not discharging is being executed. When it is determined in Step S107 that discharging is not being executed, the charge/discharge control portion 18c ends the procedure. When it is determined in Step S107 that discharging is being executed, the procedure moves to Step S108, where the charge/discharge control portion 18c determines whether the capacity zone of the "a" battery 6 is a zone for a greater capacity, as compared with the capacity zone of the "b" battery 7.

When it is determined in Step S108 that the capacity zone of the "a" battery 6 is a zone for a greater capacity, the procedure moves to Step S105, where the charge/discharge control portion 18c selects the "a" battery 6 and charges the same. When it is determined in Step S108 that the capacity zone of the "a" battery 6 is not a zone for a greater capacity, the procedure moves to Step S106, where the charge/discharge control portion 18c selects the "b" battery 7 and charges the same.

When it is determined in Step S102 that the capacity zones thereof are the same, the procedure moves to Step S109, where the battery-capacity-comparing portion 18b determines whether or not the maximum battery capacities of the "a" battery 6 and the "b" battery acquired by the battery-capacity-acquiring portion 18a are equal to each other.

When it is determined in Step S109 that the maximum battery capacities are equal, the procedure moves to Step S111, where the charge/discharge control portion 18c continuously charges/discharges the currently used battery.

On the other hand, when it is determined in Step S109 that the maximum battery capacities are different, the procedure moves to Step S110, where the battery-capacity-comparing portion 18b determines whether or not the maximum battery capacity of the "a" battery 6 is greater than the maximum battery capacity of the "b" battery 7.

When it is determined in Step S110 that the maximum battery capacity of the "a" battery 6 is greater, the procedure moves to Step S105, where the charge/discharge control portion 18c selects the "a" battery 6 and charges/discharges the same. When it is determined in Step S110 that the maximum battery capacity of the "a" battery is smaller, the procedure moves to Step S106, where the charge/discharge control portion 18c selects the "b" battery 7 and charges/discharges the same.

In the present charge/discharge control method 4, in Step S101, a plurality of batteries are classified under preliminarily set capacity zones as battery capacity ranges, based on the respective battery capacities of the batteries. Therefore, the selected batteries belong to the same zone, the step of comparing the batteries in the same zone with one another. The complexity in comparing each of capacities with another according to the states of use (charge or discharge) of each battery can be eliminated, whereby an effect of excellent practical utility can be achieved.

Note that since the present charge/discharge control method 4 is described as to a case where two batteries, i.e., the "a" battery and the "b" battery, are used, the comparison of battery capacity values of batteries belonging to the same zone is omitted in Steps S104 and S108. But in the case where a plurality of batteries belong to the same zone, a step is added for comparing the battery capacity values of the plurality of batteries belonging to the selected zone in Steps S104 and S108.

Likewise, the comparison of the charge/discharge counts of batteries belonging to the same zone is omitted in Steps S109 and S110. But in the case where a plurality of batteries belong to the same zone, steps for comparing the charge/discharge counts of the plurality of batteries belonging to the selected zone are added between Step S102 and Step S109, as is the case with Steps S109 and S110.

Note that in the present charge/discharge control method 4, the capacity zones of 0 % to 30 %, 30 % to 60 %, and 60 % to 80% are set, but the upper limit value and the lower limit value of each zone may be set appropriately according to an information processing device used. Besides, the spending of the battery to the capacity of 0 % also is known as a factor that reduces the life of the battery, as is the case with the fully charged state. Therefore, by changing the limit of "0 %" of the above-described capacity zone to about "10 %", the life of a battery can be increased.

The configurations shown in the above-described embodiment merely illustrate specific examples, and are not to be construed as limiting the technical scope of the present invention. Any configuration may be adopted as long as the effects of the invention can be achieved.

In the above-described embodiment, examples have been described in which the charge control and/or discharge control method shown in the flowcharts in FIGS. 7, 11, 13 and 15 are applied to the information processing equipment shown in FIGS. 1 to 3. However, the charge control and/or discharge control method is applicable not only to the information processing equipment, but also to other apparatuses provided with a plurality of batteries.

In the above-described embodiment, examples have been described in which the charge control and/or discharge control method shown in the flowcharts in FIGS. 7, 11, 13 and 15 are applied to the information processing equipment shown in FIGS. 1 to 3. However, the charge control and/or discharge control method is applicable not only to the information processing equipment, but also to other apparatuses provided with a plurality of batteries.

## Claims

1. Information processing equipment (10), comprising:
a plurality of battery housing portions (23R, 23L) configured to individually house batteries (24R, 24L);
lid portions (25R, 25L) that are provided corresponding respectively to the battery housing portions (23R, 23L), that are opened and closed independently during attachment or removal of the batteries (24R, 24L), and that are provided with magnetic-field-generating portions (29R, 29L);
magnetic-field-detecting elements (31 R, 31 L) that are provided corresponding to the magnetic-field-generating portions (29R, 29L), and that detect the strength of a magnetic field from the magnetic-field-generating portions (29R, 29L);
a switching portion (36) that is configured to select the battery (24R, 24L) from which power is drawn, from among batteries (24R, 24L) housed in the plurality of battery housing portions (23R, 23L);
a control portion (37) that is configured to control the switching portion (36) based on a detection result obtained by the magnetic-field-detecting elements (31 R, 31 L), and
a charge/discharge control portion (18c) that is configured to acquire battery capacities of the plurality of batteries (24R, 24L) when the lid portion (25R, 25L) is closed, and to perform switching of batteries so that when a battery capacity of one of the batteries is beyond a predetermined criterion value and a battery capacity of another battery is equal to or below the criterion value, the battery with the battery capacity beyond the criterion value is discharged, or the battery with the battery capacity below the criterion value is charged;
wherein, when acquiring a battery capacity of a battery being charged, the charge/discharge control portion (18c) is configured to determine, when the battery capacity of the battery being charged has risen above a first battery capacity value, a battery with a battery capacity less than the first battery capacity value,
when another battery with an battery capacity value less than the first battery capacity is detected by the charge/discharge control portion (18c), the charge/discharge control portion (18c) is configured to switch the battery being charged to the other battery, and charges the same, and
when no other battery with an battery capacity less than the first battery capacity is detected by the charge/discharge control portion (18c), the charge/discharge control portion (18c) is configured to continue charging after changing the first battery capacity value to a second battery capacity value that is larger than the first battery capacity value, and
wherein acquiring a battery capacity of a battery being discharged, the charge/discharge control portion (18c) is configured to determine, when the battery capacity of the battery being discharged has fallen below a first battery capacity value, a battery with an battery capacity greater than the first battery capacity value,
when another battery with an battery capacity value greater than the first battery capacity is detected by the charge/discharge control portion (18c), the charge/discharge control portion (18c) is configured to switch the battery being discharged to the other battery, and to discharge the same, and
when no other battery with an battery capacity greater than the first battery capacity is detected by the charge/discharge control portion (18c), the charge/discharge control portion (18c) is configured to continue discharging after changing the first battery capacity value to a second battery capacity value that is smaller than the first battery capacity value.

2. Information processing equipment (10), comprising:
a plurality of battery housing portions (23R, 23L) configured to individually house batteries (24R, 24L);
lid portions (25R, 25L) that are provided corresponding respectively to the battery housing portions (23R, 23L), that are opened and closed independently during attachment or removal of the batteries (24R, 24L), and that are provided with magnetic-field-generating portions (29R, 29L);
magnetic-field-detecting elements (31 R, 31 L) that are provided corresponding to the magnetic-field-generating portions (29R, 29L), and that detect the strength of a magnetic field from the magnetic-field-generating portions (29R, 29L);
a switching portion (36) that is configured to select the battery (24R, 24L) from which power is drawn, from among batteries (24R, 24L) housed in the plurality of battery housing portions (23R, 23L);
a control portion (37) that is configured to control the switching portion (36) based on a detection result obtained by the magnetic-field-detecting elements (31 R, 31 L), and
a charge/discharge control portion that is configured to acquire battery capacities of the plurality of batteries when the lid portion is closed, and to perform switching of batteries so that when a battery capacity of one of the batteries is beyond a predetermined criterion value and a battery capacity of another battery is equal to or below the criterion value, the battery with the battery capacity beyond the criterion value is discharged, or the battery with the battery capacity below the criterion value is charged;
wherein the criterion value determines capacity zones as battery capacity ranges to which individual remaining battery power of the individual batteries belong,
the charge/discharge control portion (18c) is configured to acquire capacity zones to which battery capacities of the individual batteries (24R, 24L) belong to, and
when the capacity zones are different, the charge/discharge control portion (18c) is configured to perform the switching of batteries so that the battery belonging to the capacity zone for a greater capacity is discharged, or the battery belonging to the capacity zone for a smaller capacity is charged.

3. The information processing equipment (10) according to claim 2, further comprising:
a charge/discharge-count-acquiring portion (18d) that is configured to acquire charge or discharge counts of the plurality of individual; and
a charge/discharge-count-comparing portion (18e) that is configured to compare the charge or discharge counts of the individual batteries, and to select a battery with the smallest count,
wherein, when the capacity zones to which the remaining battery powers of the individual batteries belong are the same, the charge/discharge control portion (18c) is configured to acquires the charge or discharge counts of the plurality of batteries belonging to the same capacity zone, to select the battery with the smaller count, and to use the selected battery until the charge or discharge count of the selected battery is equal to that of the battery other than the selected battery, the selected battery being charged and discharged.

## Patentansprüche

1. Informationsverarbeitungsvorrichtung (10), mit:
mehreren Batterieaufnahmeabschnitten (23R, 23L), die ausgestaltet sind, individuell Batterien (24R, 24L) aufzunehmen,
Deckelabschnitten (25R, 25L), die entsprechend jeweils zu den Batterieaufnahmeabschnitten (23R, 23L) vorgesehen sind, die während des Einsetzens oder des Entfernens der Batterien (24R, 24L) unabhängig geöffnet und geschlossen werden und die mit Magnetfelderzeugungsabschnitten (29R, 29L) versehen sind,
Magnetfelderfassungselementen (31 R, 31 L), die entsprechend zu den Magnetfelderzeugungsabschnitten (29R, 29L) vorgesehen sind und die die Stärke eines Magnetfelds von den Magnetfelderzeugungsabschnitten (29R, 29L) erfassen,
einem Schaltabschnitt (36), der ausgestaltet ist, aus Batterien (24R, 24L), die in den mehreren Batterieaufnahmeabschnitten (23R, 23L) aufgenommen sind, die Batterie (24R, 24L) auszuwählen, von der Leistung gezogen wird,
einem Steuerabschnitt (37), der ausgestaltet ist, den Schaltabschnitt (36) auf Basis eines Erfassungsergebnisses zu steuern, das durch die Magnetfelderfassungselemente (31R, 31L) erhalten wird, und
einem Lade-/Entlade-Steuerabschnitt (18c), der ausgestaltet ist, Batteriekapazitäten der mehreren Batterien (24R, 24L) zu erhalten, wenn der Deckelabschnitt (25R, 25L) geschlossen ist, und ein Umschalten zwischen den Batterien durchzuführen, so dass, wenn eine Batteriekapazität eine der Batterien jenseits eines vorbestimmten Kriteriumswerts und eine Batteriekapazität einer anderen Batterie gleich oder unterhalb des Kriteriumswerts ist, die Batterie mit der Batteriekapazität jenseits des Kriteriumwerts entladen wird oder die Batterie mit der Batteriekapazität unterhalb des Kriteriumwerts geladen wird,
wobei, wenn eine Batteriekapazität einer Batterie, die geladen wird, erhalten wird, der Lade-/Entlade-Steuerabschnitt (18c) ausgestaltet ist, wenn die Batteriekapazität der Batterie, die geladen wird, über einen ersten Batteriekapazitätswert angestiegen ist, eine Batterie mit einer Batteriekapazität, die geringer als der erste Batteriekapazitätswert ist, zu bestimmen,
wenn eine andere Batterie mit einem Batteriekapazitätswert, der geringer als die erste Batteriekapazität ist, durch den Lade-/Entlade-Steuerabschnitt (18c) erfasst wird, der Lade/Entlade-Steuerabschnitt (18c) ausgestaltet ist, von der Batterie, die geladen wird, auf die andere Batterie umzuschalten und diese zu laden, und
wenn keine andere Batterie mit einer Batteriekapazität, die geringer als die erste Batteriekapazität ist, durch den Lade-/Entlade-Steuerabschnitt (18c) erfasst wird, der Lade-/Entlade-Steuerabschnitt (18c) ausgestaltet ist, das Laden nach einem Ändern des ersten Batteriekapazitätswerts zu einem zweiten Batteriekapazitätswert, der größer als der erste Batteriekapazitätswert ist, fortzusetzen, und
wenn eine Batteriekapazität einer Batterie, die entladen wird, erhalten wird, der Lade-/Entlade-Steuerabschnitt (18c) ausgestaltet ist, wenn die Batteriekapazität der Batterie, die entladen wird, unter einen ersten Batteriekapazitätswert gefallen ist, eine Batterie mit einer Batteriekapazität, die größer als der erste Batteriekapazitätswert ist, zu bestimmen,
wenn eine andere Batterie mit einem Batteriekapazitätswert, der größer als die erste Batteriekapazität ist, durch den Lade-/Entlade-Steuerabschnitt (18c) erfasst wird, der Lade-/Entlade-Steuerabschnitt (18c) ausgestaltet ist, von der Batterie, die entladen wird, zu der anderen Batterie zu wechseln und diese zu entladen, und
wenn keine andere Batterie mit einer Batteriekapazität, die größer als die erste Batteriekapazität ist, durch den Lade-/Entlade-Steuerabschnitt (18c) erfasst wird, der Lade-/Entlade-Steuerabschnitt (18c) ausgestaltet ist, das Entladen nach einem Ändern des ersten Batteriekapazitätswerts zu einem zweiten Batteriekapazitätswert, der geringer als der erste Batteriekapazitätswert ist, fortzusetzen.

2. Informationsverarbeitungsvorrichtung (10), mit:
mehreren Batterieaufnahmeabschnitten (23R, 23L), die ausgestaltet sind, individuell Batterien (24R, 24L) aufzunehmen,
Deckelabschnitten (25R, 25L), die entsprechend jeweils zu den Batterieaufnahmeabschnitten (23R, 23L) vorgesehen sind, die während des Einsetzens oder des Entfernens der Batterien (24R, 24L) unabhängig geöffnet und geschlossen werden und die mit Magnetfelderzeugungsabschnitten (29R, 29L) versehen sind,
Magnetfelderfassungselementen (31R, 31L), die entsprechend zu den Magnetfelderzeugungsabschnitten (29R, 29L) vorgesehen sind und die die Stärke eines Magnetfelds von den Magnetfelderzeugungsabschnitten (29R, 29L) erfassen,
einem Schaltabschnitt (36), der ausgestaltet ist, aus Batterien (24R, 24L), die in den mehreren Batterieaufnahmeabschnitten (23R, 23L) aufgenommen sind, die Batterie (24R, 24L) auszuwählen, von der Leistung gezogen wird,
einem Steuerabschnitt (37), der ausgestaltet ist, den Schaltabschnitt (36) auf Basis eines Erfassungsergebnisses zu steuern, das durch die Magnetfelderfassungselemente (31R, 31L) erhalten wird, und
einem Lade-/Entlade-Steuerabschnitt, der ausgestaltet ist, Batteriekapazitäten der mehreren Batterien zu erhalten, wenn der Deckelabschnitt geschlossen ist, und ein Umschalten zwischen den Batterien durchzuführen, so dass, wenn eine Batteriekapazität einer der Batterien jenseits eines vorbestimmten Kriteriumswerts ist und eine Batteriekapazität einer anderen Batterie gleich oder unterhalb des Kriteriumswerts ist, die Batterie mit der Batteriekapazität jenseits des Kriteriumswerts entladen wird oder die Batterie mit der Batteriekapazität unterhalb des Kriteriumswerts geladen wird,
wobei der Kriteriumswert Kapazitätszonen als Batteriekapazitätsbereiche bestimmt, zu denen individuelle verbleibende Batterieleistung der individuellen Batterien gehört,
der Lade-/Entlade-Steuerabschnitt (18c) ausgestaltet ist, Kapazitätszonen zu beschaffen, zu denen Batteriekapazitäten der individuellen Batterien (24R, 24L) gehören, und
wenn die Kapazitätszonen unterschiedlich sind, der Lade-/Entlade-Steuerabschnitt (18c) ausgestaltet ist, das Umschalten zwischen den Batterien derart durchzuführen, dass die Batterie, die zu der Kapazitätszone für eine größere Kapazität gehört, entladen wird oder die Batterie, die zu der Kapazitätszone für eine geringere Kapazität gehört, geladen wird.

3. Informationsverarbeitungsvorrichtung (10) nach Anspruch 2, ferner mit:
einem Lade-/Entlade-Zahl-Beschaffungsabschnitt (18d), der ausgestaltet ist, Ladeoder Entlade-Zahlen der mehreren individuellen Batterien zu beschaffen, und
einem Lade-/Entlade-Zahl-Vergleichsabschnitt (18e), der ausgestaltet ist, die Ladeoder Entlade-Zahlen der individuellen Batterien zu vergleichen, und eine Batterie mit der geringsten Zahl auszuwählen,
wobei, wenn die Kapazitätszonen, zu denen verbleibende Batterieleistungen der individuellen Batterien gehören, die gleichen sind, der Lade-/Entlade-Steuerabschnitt (18c) ausgestaltet ist, die Lade- oder Entlade-Zahlen der mehreren Batterien zu beschaffen, die zu der gleichen Kapazitätszone gehören, die Batterie mit der geringeren Zahl auszuwählen, und die ausgewählte Batterie zu benutzen, bis die Lade- oder Entlade-Zahl der ausgewählten Batterie gleich zu der der Batterie außer der ausgewählten Batterie ist, wobei die ausgewählte Batterie geladen und entladen wird.

## Revendications

1. Dispositif de traitement d'information (10) comprenant:
une pluralité de portions de logement de pile (23R, 23L) qui sont configurées pour loger individuellement des piles (24R, 24L),
des portions de couvercle (25R, 25L) qui sont prévues pour correspondre respectivement aux portions de logement de pile (23R, 23L), qui sont ouvertes et fermées de manière indépendante lors de l'insertion ou du retrait des piles (24R, 24L) et qui sont munies de portions de génération de champ magnétique (29R, 29L),
des éléments de détection de champ magnétique (31 R, 31 L) qui sont prévus pour correspondre aux portions de génération de champ magnétique (29R, 29L) et qui détectent la force d'un champ magnétique provenant des portions de génération de champ magnétique (29R, 29L),
une portion de commutation (36) qui est configurée pour choisir, parmi des piles (24R, 24L) logées dans ladite pluralité de portions de logement de pile (23R, 23L), la pile (24R, 24L) sur laquelle de la puissance est prélevée,
une portion de commande (37) qui est configurée pour commander la portion de commutation (36) sur la base d'un résultat de détection obtenu par les éléments de détection de champ magnétique (31 R, 31 L), et
une portion de commande de charge/décharge (18c) qui est configurée pour acquérir des capacités de pile de la pluralité de piles (24R, 24L) lorsque la portion de couvercle (25R, 25L) est fermée, et pour réaliser une commutation entre les piles de telle sorte que, lorsqu'une capacité de pile de l'une des piles est au-delà d'une valeur de critère prédéterminée et une capacité de pile d'une autre pile est égale ou inférieure à la valeur de critère, la pile ayant la capacité de pile au-delà de la valeur de critère est déchargée ou la pile ayant la capacité de pile inférieure à la valeur de critère est chargée,
dans lequel, lorsqu'une capacité de pile d'une pile qui est chargée est acquise, ladite portion de commande de charge/décharge (18c) est configurée pour déterminer, lorsque la capacité de pile de la pile qui est chargée a dépassé une première valeur de capacité de pile, une pile ayant une capacité de pile qui est inférieure à la première valeur de capacité de pile,
lorsqu'une autre pile ayant une valeur de capacité de pile qui est inférieure à la première capacité de pile est détectée par la portion de commande de charge/décharge (18c), la portion de commande de charge/décharge (18c) est configurée pour passer de la pile qui est chargée à l'autre pile et pour charger celle-ci, et
lorsqu'aucune autre pile ayant une capacité de pile qui est inférieure à la première capacité de pile n'est détectée par la portion de commande de charge/décharge (18c), la portion de commande de charge/décharge (18c) est configurée pour continuer à charger après que la première valeur de capacité de pile a été changée de manière à passer à une deuxième valeur de capacité de pile qui est supérieure à la première valeur de capacité de pile, et
lorsqu'une capacité de pile d'une pile qui est déchargée est acquise, ladite portion de commande de charge/décharge (18c) est configurée pour déterminer, lorsque la capacité de pile de la pile qui est déchargée est devenue inférieure à une première valeur de capacité de pile, une pile ayant une capacité de pile qui est supérieure à la première valeur de capacité de pile,
lorsqu'une autre pile ayant une valeur de capacité de pile qui est supérieure à la première capacité de pile est détectée par la portion de commande de charge/décharge (18c), la portion de commande de charge/décharge (18c) est configurée pour passer de la pile qui est déchargée à l'autre pile et pour décharger celle-ci, et
lorsqu'aucune autre pile ayant une capacité de pile qui est supérieure à la première capacité de pile n'est détectée par la portion de commande de charge/décharge (18c), la portion de commande de charge/décharge (18c) est configurée pour continuer à décharger après que la première valeur de capacité de pile a été changée de manière à passer à une deuxième valeur de capacité de pile qui est inférieure à la première valeur de capacité de pile.

2. Dispositif de traitement d'information (10) comprenant:
une pluralité de portions de logement de pile (23R, 23L) qui sont configurées pour loger individuellement des piles (24R, 24L),
des portions de couvercle (25R, 25L) qui sont prévues pour correspondre respectivement aux portions de logement de pile (23R, 23L), qui sont ouvertes et fermées de manière indépendante lors de l'insertion ou du retrait des piles (24R, 24L) et qui sont munies de portions de génération de champ magnétique (29R, 29L),
des éléments de détection de champ magnétique (31 R, 31 L) qui sont prévus pour correspondre aux portions de génération de champ magnétique (29R, 29L) et qui détectent la force d'un champ magnétique provenant des portions de génération de champ magnétique (29R, 29L),
une portion de commutation (36) qui est configurée pour choisir, parmi des piles (24R, 24L) logées dans ladite pluralité de portions de logement de pile (23R, 23L), la pile (24R, 24L) sur laquelle de la puissance est prélevée,
une portion de commande (37) qui est configurée pour commander la portion de commutation (36) sur la base d'un résultat de détection obtenu par les éléments de détection de champ magnétique (31R, 31L), et
une portion de commande de charge/décharge qui est configurée pour acquérir des capacités de pile de la pluralité de piles lorsque la portion de couvercle est fermée, et pour réaliser une commutation entre les piles de sorte que, lorsqu'une capacité de pile de l'une des piles est au-delà d'une valeur de critère prédéterminée et une capacité de pile d'une autre pile est égale ou inférieure à la valeur de critère, la pile ayant la capacité de pile au-delà de la valeur de critère est déchargée ou la pile ayant la capacité de pile inférieure à la valeur de critère est chargée,
dans lequel la valeur de critère détermine des zones de capacité en tant que plages de capacités de pile auxquelles appartient de la puissance de pile individuelle restante des piles individuelles,
ladite portion de commande de charge/décharge (18c) est configurée pour acquérir des zones de capacité auxquelles appartiennent des capacités de pile des piles individuelles (24R, 24L), et
lorsque les zones de capacité sont différentes, ladite portion de commande de charge/décharge (18c) est configurée pour réaliser la commutation entre les piles de telle sorte que la pile apparentant à la zone de capacité pour une plus grande capacité est déchargée ou la pile appartenant à la zone de capacité pour une plus faible capacité est chargée.

3. Dispositif de traitement d'information (10) selon la revendication 2, comprenant en outre:
une portion d'acquisition de nombres de charge/décharge (18d) qui est configurée pour acquérir des nombres de charge ou de décharge de la pluralité de piles individuelles, et
une portion de comparaison de nombres de charge/décharge (18e) qui est configurée pour comparer les nombres de charge/décharge des piles individuelles et pour choisir une pile ayant le nombre le plus petit,
dans lequel, lorsque les zones de capacité auxquelles appartiennent des puissances de pile restantes des piles individuelles sont les mêmes, la portion de commande de charge/décharge (18c) est configurée pour acquérir les nombres de charge ou de décharge de la pluralité de piles qui appartiennent à la même zone de capacité, pour choisir la pile ayant le nombre plus petit et pour utiliser la pile choisie jusqu'à ce que le nombre de charge ou de décharge de la pile choisie soit égal à celui de la pile autre que la pile choisie, la pile choisie étant chargée et déchargée.
